# EUROPÄISCHE PATENTSCHRIFT

(11) **EP 4 186 951 B1**
(45) Veröffentlichungstag und Bekanntmachung des Hinweises auf die Patenterteilung: **08.01.2025**
(21) Anmeldenummer: 21211298.1
(22) Anmeldetag: 30.11.2021
(51) Int. Cl.: C09D 5/00

(54) **VERFAHREN ZUR HERSTELLUNG EINER MEHRSCHICHTLACKIERUNG**
METHOD FOR PRODUCING A MULTILAYER COATING
PROCÉDÉ DE FABRICATION D'UNE PEINTURE MULTICOUCHE

(43) Veröffentlichungstag der Anmeldung: 31.05.2023
(73) Patentinhaber: BASF Coatings GmbH, 48165 Münster (DE); VOLKSWAGEN AG, 38440 Wolfsburg (DE); AUDI AG, 85057 Ingolstadt (DE)
(72) Erfinder: FLESCHER, Oliver, 38440 Wolfsburg (DE); HANSEL, Dirk, 38440 Wolfsburg (DE); KRALLMANN, Ralf, 38440 Wolfsburg (DE); MELZER, Stefan, 30175 Hannover (DE); NIGGEMEIER, Frank, 38440 Wolfsburg (DE); THOMALLA, Peter, 38440 Wolfsburg (DE); PLESNIEROWICZ, Robert, 62-025 Kostrzyn (PL); HEROLD, Michael, 48165 Muenster (DE); WETTERICH, Matthias, 97080 Wuerzburg (DE); MAERZ, Manuela, 97080 Wuerzburg (DE); HILGER, Christopher, 48165 Muenster (DE); MOHR, Carsten, 85045 Ingolstadt (DE); SUPPA, Sebastian, 85057 Ingoldstadt (DE)
(74) Vertreter: BASF IP Association

(56) Entgegenhaltungen:
- WO-A1-2016/000949
- WO-A1-2020/216584
- WO-A1-2021/148255
- US-A1- 2014 377 468

## Beschreibung

Die vorliegende Erfindung betrifft ein Verfahren zur Herstellung einer Mehrschichtlackierung bei dem eine Basislackschicht direkt auf einem mit einer gehärteten Elektrotauchlackierung beschichteten metallischen Substrat hergestellt wird, direkt auf der Basislackschicht eine Klarlackschicht hergestellt wird und anschließend die Basislackschicht und die Klarlackschicht gemeinsam gehärtet werden. Zudem betrifft die vorliegende Erfindung eine Mehrschichtlackierung, die nach dem erfindungsgemäßen Verfahren hergestellt wurde.

### Stand der Technik

Mehrschichtlackierungen auf metallischen Substraten, beispielsweise Mehrschichtlackierungen im Bereich der Automobilindustrie, sind bekannt. In der Regel umfassen solche Mehrschichtlackierungen, vom metallischen Substrat (das heißt insbesondere der Karosserie) aus betrachtet, eine Elektrotauchlackschicht, eine direkt auf die Elektrotauchlackschicht aufgebrachte, meist als Füllerschicht bezeichnete Schicht, mindestens eine Farb- und/oder Effektpigmente enthaltende und in der Regel als Basislackschicht bezeichnete Schicht sowie eine Klarlackschicht.

Die grundsätzlichen Zusammensetzungen und Funktionen der genannten Schichten und der zum Aufbau diese Schichten notwendigen Beschichtungsmittel, das heißt Elektrotauchlacke, so genannte Füller, als Basislacke bekannte Farb- und/oder Effektpigmente enthaltende Beschichtungsmittel und Klarlacke, sind bekannt. So dient beispielsweise die elektrophoretisch aufgebrachte Elektrotauchlackschicht grundsätzlich dem Korrosionsschutz des Substrats. Die so genannte Füllerschicht dient hauptsächlich dem Schutz vor mechanischer Beanspruchung wie beispielsweise Steinschlag und zudem dem Ausfüllen von Unebenheiten des Substrats. Die nächste, als Basislackschicht bezeichnete Schicht ist hauptverantwortlich für die Erzeugung von ästhetischen Eigenschaften wie der Farbe und/oder Effekten wie dem Flop, während die dann folgende Klarlackschicht insbesondere der Kratzfestigkeit sowie dem Glanz der Mehrschichtlackierung dient.

Die Herstellung dieser Mehrschichtlackierungen erfolgt in der Regel so, dass zunächst ein Elektrotauchlack, insbesondere ein kathodischer Elektrotauchlack elektrophoretisch auf dem metallischen Substrat, beispielsweise einer Automobilkarosserie, aufgebracht beziehungsweise abgeschieden wird. Das metallische Substrat kann vor der Abscheidung des Elektrotauchlacks unterschiedlich vorbehandelt werden, beispielsweise können bekannte Konversionsbeschichtungen wie Phosphatschichten, insbesondere Zinkphosphatschichten, aufgebracht werden. Der Abscheideprozess des Elektrotauchlacks findet in der Regel in entsprechenden Elektrotauchlackbecken statt. Nach dem Auftrag wird das beschichtete Substrat aus dem Becken entfernt, gegebenenfalls gespült und abgelüftet und/oder zwischengetrocknet, und schließlich wird der aufgetragene Elektrotauchlack gehärtet. Dabei werden Schichtdicken von etwa 10 bis 25 Mikrometer angestrebt. Bevor anschließend der so genannte Füller direkt auf die gehärtete Elektrotauchlackschicht aufgetragen wird, erfolgt in der Regel noch eine Abdichtung der Karosserienähte mit Polyvinylchlorid (PVC)-Pasten. Der danach aufgetragene Füller wird gegebenenfalls abgelüftet und/oder zwischengetrocknet und anschließend gehärtet. Bei dieser Härtung, die regelmäßig bei vergleichsweise hohen Temperaturen von beispielsweise 160°C durchgeführt wird, findet dann auch die Gelierung des PVC und damit die letztliche Abdichtung statt. Damit die gehärtete Füllerschicht die oben genannten Aufgaben erfüllen kann, werden Schichtdicken von beispielsweise 25 bis 45 Mikrometern angestrebt. Direkt auf die gehärtete Füllerschicht wird anschließend ein so genannter Farb- und/oder Effektpigmente enthaltener Basislack aufgebracht, dieser gegebenenfalls abgelüftet und/oder zwischengetrocknet und auf die so hergestellte Basislackschicht ohne separate Härtung direkt ein Klarlack aufgebracht. Anschließend werden die Basislackschicht und die gegebenenfalls zuvor ebenfalls abgelüftete und/oder zwischengetrocknete Klarlackschicht gemeinsam gehärtet (nass-in-nass-Verfahren). Während die gehärtete Basislackschicht grundsätzlich vergleichsweise geringe Schichtdicken von beispielsweise 10 bis 20 Mikrometer aufweist, werden für die gehärtete Klarlackschicht Schichtdicken von beispielsweise 30 bis 60 Mikrometer angestrebt, um die beschriebenen anwendungstechnologischen Eigenschaften zu erreichen. Das Aufbringen von Füller, Basislack und Klarlack kann beispielsweise über die dem Fachmann bekannten Applikationsmethoden der pneumatischen und/oder elektrostatischen Sprühapplikation erfolgen. Füller und Basislack werden heutzutage schon aus ökologischen Gründen vermehrt als wässrige Beschichtungsstoffe eingesetzt.

Solche Mehrschichtlackierungen sowie Verfahren zu deren Herstellung werden beispielsweise in DE 199 48 004 A1, Seite 17, Zeile 37, bis Seite 19, Zeile 22, oder auch in DE 100 43 405 C1, Spalte 3, Absatz [0018], und Spalte 8, Absatz [0052] bis Spalte 9, Absatz [0057], in Verbindung mit Spalte 6, Absatz [0039] bis Spalte 8, Absatz [0050] beschrieben. Allgemein wird das entsprechende Verfahren auch als Standard-Verfahren oder 5A-Verfahren bezeichnet.

Auch wenn die so hergestellten Mehrschichtlackierungen die von der Automobilindustrie gestellten Anforderungen an anwendungstechnologische Eigenschaften und ästhetisches Profil in der Regel erfüllen können, rückt aus ökologischen und ökonomischen Motiven heutzutage immer mehr die Vereinfachung des beschriebenen und vergleichsweise komplexen Herstellprozesses in den Fokus der Automobilhersteller.

So gibt es Ansätze, bei denen versucht wird, auf den Füller beziehungsweise die Füllerschicht zu verzichten, wobei dann also lediglich (mindestens) eine Basislackschicht direkt auf der Elektrotauchlackschicht hergestellt wird, welche dann ohne separaten Härtungsschritt mit einem Klarlack überschichtet wird. Anstelle des separaten Aufbringens eines Füllers erfolgt also der direkte Auftrag einer Basislackschicht auf der Elektrotauchlackschicht und dann das Aufbringen einer Klarlackschicht. In einem abschließenden Härtungsschritt werden dann alle auf der Elektrotauchlackschicht aufgebrachten Beschichtungsschichten, das heißt die (mindestens) eine Basislackschicht und die Klarlackschicht, gehärtet.

Gerade das Verzichten auf einen Füller ist unter ökologischen und ökonomischen Gesichtspunkten sehr vorteilhaft. Denn dies führt offensichtlich zur Materialeinsparung und auch dem Verzicht des Füller-Schleifprozesses, sodass der gesamte Herstellungsprozess selbstverständlich wesentlich stringenter und zügiger ablaufen kann.

Herausfordernd ist bei dieser Form der Herstellung die Erlangung zufriedenstellender anwendungstechnologischer und ästhetischer Eigenschaften.

So können durch das beschriebene Verfahren ungewünschte Luft-, Lösemittel- und/oder Feuchtigkeitseinschlüsse entstehen, die sich in Form von Blasen unterhalb der Oberfläche der Gesamtlackierung bemerkbar machen können und bei der abschließenden Härtung aufbrechen können. Die dadurch entstehenden Löcher in der Lackierung, auch Nadelstiche genannt, führen zu einem nachteilhaften optischen Erscheinungsbild. Zu berücksichtigen ist nämlich, dass je nach Anwendung und Gebrauch der herzustellenden Mehrschichtlackierung bei vollständigem Verzicht auf die im Standardprozess als Füllerschicht bezeichnete Beschichtung in der Regel eine im Vergleich zu den Standardsystemen dickere Basislackschicht benötigt wird, um die gewünschten Eigenschaften zu erhalten. Damit ist die Gesamtschichtdicke von Beschichtungsschichten, die im abschließenden Härtungsschritt gehärtet werden müssen, wesentlich höher als im Standardprozess, sodass die entsprechenden Probleme mit Nadelstichen auftreten können.

Aber auch der Erhalt weiterer Eigenschaften, wie einer akzeptablen Appearance, von guter Steinschlag- und Witterungsbeständigkeit oder niedriger UV-Transmission, stellt in diesem Zusammenhang eine Herausforderung dar.

Für die Realisierung des oben beschriebenen Verfahrens, bei dem wie beschrieben auf die Applikation und separate Härtung des Füllers verzichtet wird, werden bei den entsprechenden Automobilherstellern dezidierte Lackierlinien gebaut, in denen dann auf den Applikations- und Härtungsbereich für den Füller verzichtet wird. Statt eines zusätzlichen Bereichs zur Härtung des Füllers mit entsprechend hohen Temperaturen gibt es stattdessen lediglich den abschließenden Härtungsbereich zur Härtung des mindestens einen Basislacks sowie des Klarlacks. Bekanntermaßen erfolgt diese Härtung bei in der Regel niedrigeren Temperaturen, als dies für den Füller der Fall ist. Ein entsprechendes Temperaturfenster für 1 Komponenten-Lacke kann beispielsweise von 120 bis 140°C liegen. Im Falle von 2 Komponenten-Lacken sind die Temperaturen selbstverständlich nochmals deutlich niedriger. Zum einen benötigen die entsprechenden Lacke keine so hohen Temperaturen zur Härtung. Zum anderen aber sind entsprechend hohe Temperaturen auch zu vermeiden, um Überbrennungsprozesse zu vermeiden und damit die strukturelle Integrität der Lackschichten nicht zu gefährden.

Zu beachten ist allerdings, dass im Rahmen solcher Anlagen, in denen eben nicht für einen Füller passende Härtungstemperaturen vorgesehen sind und auch nicht zum Einsatz kommen, andere PVC-Pasten zur Karosserieabdichtung zum Einsatz kommen müssen. Während die Standard-PVC-Pasten (das heißt die im Zusammenhang mit dem Standard-Verfahren und Einsatz eines Füllers verwendeten Pasten) entsprechend hohe Temperaturen zur Gelierung und Abdichtung benötigen, können die vorbenannten anderen PVC-Pasten bei bereits geringeren Temperaturen gehärtet werden. Allerdings muss berücksichtigt werden, dass diese bei niedrigeren Temperaturen gelierenden PVC-Pasten signifikant höherpreisig sind.

Weiterhin zu beachten ist, dass im Rahmen einer wie oben beschriebenen, dezidierten Anlage ohne Bereich zur Füllerapplikation und -härtung naturgemäß nicht zwischen einen Standard-Verfahren und einem entsprechend weiterentwickelten Verfahren gewechselt werden kann und demzufolge diese Form der Flexibilität fehlt.

Hinzu kommt, dass die Gelierung der PVC-Paste in auf das weiterentwickelte Verfahren (kein Füller) ausgerichteten Anlagen erst im abschließenden Härtungsschritt erfolgt, während dies in den Standard-Anlagen bereits nach der Applikation des Füllers erfolgt. Demzufolge wird in den auf das Standard-Verfahren ausgerichteten Anlagen der Füller gleichzeitig auf das Hauptsubstrat (das heißt die mit einer Elektrotauchlackschicht ausgestatte Karosse) und die nicht gelierte PVC-Schicht appliziert, während der Basislack auf die gehärtete Füllerschicht appliziert wird. In Anlagen, in denen das weiterentwickelte Verfahren realisiert wird, wird stattdessen der Basislack gleichzeitig auf das Hauptsubstrat (das heißt die mit einer Elektrotauchlackschicht ausgestatte Karosse) und die nicht gelierte PVC-Schicht appliziert.

Würde man nun zur Ermöglichung einer erhöhten Flexibilität des Applikationsverfahrens und gleichzeitigen Verzichts auf die teureren PVC-Pasten das weiterentwickelte Verfahren (ohne Füller) in einer auf das Standard-Verfahren ausgerichteten Anlage durchführen, ergäbe sich die Situation, dass nach Applikation des Standard-PVC die Karosse durch den Bereich der Hochtemperatur-Füllerhärtung geführt wird, um die Gelierung durchzuführen. Der dann folgende Basislack wird dann gleichzeitig auf das Hauptsubstrat (das heißt die mit einer Elektrotauchlackschicht ausgestatte Karosse) und die gelierte PVC-Schicht appliziert. Der Basislack müsste also auf einer Oberfläche aufgebracht werden, die weder derjenigen des Standardverfahrens noch derjenigen des weiterentwickelten Verfahrens entspricht.

Von Interesse wäre eine technische Lösung, bei der innerhalb einer für das Standard-Verfahren ausgelegten Anlage Lackieraufbauten auch ohne Füllerapplikation und Füllerhärtung hergestellt werden können und trotzdem die gewünschten anwendungstechnologischen und ästhetischen Eigenschaften erreicht werden.

Hinzu kommt, dass heutzutage der Ersatz von Beschichtungsmitteln auf Basis organischer Lösemittel durch wässrige Beschichtungsmittel immer wichtiger wird, um den steigenden Anforderungen an die Umweltverträglichkeit Rechnung zu tragen. Gerade in Bezug auf wässrige Beschichtungsmittel ist es wiederum nicht einfach, einen für ein sinnvolles ökologisches Profil wichtigen hohen Festkörpergehalt zu realisieren.

Eine der nach wie vor wichtigsten Farben von Automobilmehrschichtlackierungen ist weiß. Die Akzeptanz beziehungsweise optische Wertschätzung dieser Farbe ist sehr hoch.

US 2014/377468 A1 offenbart eine Methode zum Aufbringen einer Mehrschichtbeschichtung umfassend einen Basislack und einen Klarlack. Der Basislack ist eine härtbare wässrige Zusammensetzung, die polymere Partikel und ein Polyhydrazid enthält. Die wässrige Zusammensetzung enthält ein hydrophobes Polymer zur Verbesserung der Feuchtigkeitsresistenz.

WO 2020/216584 A1 offenbart wässrige Beschichtungszusammensetzungen enthaltend wenigstens eine Dispersion von Kern/Schale Partikeln umfassend ein Polyurethanharz als Kern und ein vernetztes acrylisches Harz als Schale.

WO 2016/000949 A1 offenbart einen pigmentierten wässrigen Basislack enthaltend ein Polyether-basiertes Reaktionsprodukt.

WO 2021/148255 A1 offenbart eine von Effektpigmenten freie wässrige Beschichtungszusammensetzung enthaltend wenigstens ein anionisch stabilisiertes Bindemittel B, wenigstens ein Farbpigment B, wenigstens eine Polycarbonsäure PC und optional wenigstens ein Lösemittel S.

### Aufgabe

Aufgabe der vorliegenden Erfindung war es, eine Lösung bereitzustellen, bei der unter Einsatz eines wässrigen, vorzugsweise weißen Basislacks eine Mehrschichtlackierung ohne Applikation und separater Härtung eines Füllers hergestellt werden kann. Dabei sollte es zusätzlich ermöglicht werden, die Mehrschichtlackierung auf einer Standard-Anlage herzustellen und dabei insbesondere auch auf den Einsatz teurer PVC-Pasten zur Abdichtung zu verzichten. Trotzdem sollten hervorragende anwendungstechnische Eigenschaften erzielt werden.

### Technische Lösung

Es wurde gefunden, dass die genannten Aufgaben gelöst werden konnten durch ein neues Verfahren zur Herstellung einer Mehrschichtlackierung (M) auf einer metallischen Karosserie (K) umfassend Karosserienähte (Kn) umfassend
(1) Herstellung einer gehärteten Elektrotauchlackschicht (E.1) auf dem metallischen Substrat (S) durch elektrophoretisches Aufbringen eines Elektrotauchlacks (e.1) auf das Substrat (S) und anschließende Härtung des Elektrotauchlacks (e.1),
(2) Herstellung einer gelierten PVC-Abdichtung (P.2) in einem Bereich der Karosserienähte (Kn) durch Aufbringen einer PVC-Abdichtungspaste (p.2) auf die gehärtete Elektrotauchlackschicht (E.1) in dem Bereich der Karosserienähte (Kn) und anschließende thermisch initiierte Gelierung der Paste (p.2),
(3) Herstellung einer Basislackschicht (B.3.1) oder (3.2) mehrerer direkt aufeinander folgender Basislackschichten (B.3.2.x) direkt auf der gemäß Schritt (2) erhaltenen Oberfläche durch (3.1) Aufbringen eines wässrigen Basislacks (b.3.1) direkt auf die Oberfläche oder (3.2) direkt aufeinanderfolgendes Aufbringen von mehreren Basislacken (b.3.2.x) auf die Oberfläche,
(4) Herstellung einer Klarlackschicht (K) direkt auf (4.1) der Basislackschicht (B.3.1) oder (4.2) der obersten Basislackschicht (B.3.2.x) durch Aufbringen eines Klarlacks (k) direkt auf (4.1) die Basislackschicht (B.3.1) oder (4.2) die oberste Basislackschicht (B.4.2.x),
(5) gemeinsame Härtung der (5.1) Basislackschicht (B.3.1) und der Klarlackschicht (K) oder (5.2) der Basislackschichten (B.3.2.x) und der Klarlackschicht (K),
dadurch gekennzeichnet, dass
der Basislack (b.3.1) oder die Basislacke (b.3.2.x) wässrig sind und mindestens ein Pigment enthalten und der Basislack (b.3.1) oder mindestens einer der Basislacke (b.3.2.x)
- mindestens eine wässrige Dispersion eines Polyurethans (PUR) als Bindemittel enthält, und
- ein Pigment zu Bindemittel (P/B) Verhältnis von mehr als 0,75 sowie
- einen Festkörper von mindestens 35 %
aufweist.

Das oben genannte Verfahren wird in der Folge auch als erfindungsgemäßes Verfahren bezeichnet und ist dementsprechend Gegenstand der vorliegenden Erfindung. Bevorzugte Ausführungsformen des erfindungsgemäßen Verfahrens sind der weiter unten folgenden Beschreibung sowie den Unteransprüchen zu entnehmen.

Weiterhin Gegenstand der vorliegenden Erfindung ist eine Mehrschichtlackierung, die anhand des erfindungsgemäßen Verfahrens hergestellt wurde.

Das erfindungsgemäße Verfahren erlaubt die Herstellung von Mehrschichtlackierungen ohne Applikation und separater Härtung eines Füllers, wobei jedoch das der Herstellung zugrundeliegende Verfahren auf einer Standard-Anlage durchgeführt werden kann. Dies zeigt sich insbesondere darin, dass in Schritt (2) des Verfahrens eine thermisch initiierte Gelierung der PVC-Paste durchgeführt wird (wobei diese Gelierung augenscheinlich bevorzugt in dem in einer Standard-Anlage vorhandenen Bereich für die Härtung des Füllers stattfindet). Dabei ist es möglich, auf den Einsatz teurer PVC-Pasten zur Abdichtung zu verzichten. Zudem werden trotzdem hervorragende anwendungstechnische Eigenschaften erzielt. Durch einen höheren Festkörperanteil und die anlassbezogene Verwendung von speziellen Additiven, die die geforderte UV-Beständigkeit sicherstellen, können alle Uni- als auch Effektlacke (Metallic, Perleffekt oder Ähnliches) nach dem erfindungsmäßen Verfahren aufgebracht werden. Die Erfindung ist auch auf vorhandenen Lackieranlagen einsetzbar, so dass auf aufwendige Umbaumaßnahmen verzichtet werden kann.

### Ausführliche Beschreibung

Zunächst seien einige im Rahmen der vorliegenden Erfindung verwendeten Begriffe erläutert.

Das Aufbringen eines Beschichtungsmittels auf ein Substrat beziehungsweise das Herstellen einer Beschichtungsschicht auf einem Substrat verstehen sich wie folgt. Das jeweilige Beschichtungsmittel wird so aufgebracht, dass die daraus hergestellte Beschichtungsschicht auf dem Substrat angeordnet ist, jedoch nicht zwangsläufig in direktem Kontakt mit dem Substrat stehen muss. Zwischen der Beschichtungsschicht und dem Substrat können beispielsweise noch andere Schichten angeordnet sein.

Beispielsweise wird in Stufe (1) die gehärtete Elektrotauchlackschicht (E.1) auf der metallischen Karosse (K) hergestellt, jedoch kann zwischen dem Substrat (das heißt der Karosse) und der Elektrotauchlackschicht noch eine wie weiter unten beschriebene Konversionsbeschichtung wie eine Zinkphosphatierung angeordnet sein.

Dasselbe Prinzip gilt für das Aufbringen eines Beschichtungsmittels (b) auf eine mittels eines anderen Beschichtungsmittels (a) hergestellte Beschichtungsschicht (A) beziehungsweise die Herstellung einer Beschichtungsschicht (B) auf einer anderen Beschichtungsschicht (A), die beispielsweise auf dem metallischen Substrat (S) angeordnet ist. Die Beschichtungsschicht (B) muss nicht zwangsläufig mit der Beschichtungsschicht (A) in Kontakt stehen, sie muss lediglich darüber, das heißt auf der vom metallischen Substrat abgewandten Seite der Beschichtungsschicht (A) angeordnet sein.

Im Unterschied dazu versteht sich das Aufbringen eines Beschichtungsmittels direkt auf ein Substrat beziehungsweise das Herstellen einer Beschichtungsschicht direkt auf einem Substrat wie folgt. Das jeweilige Beschichtungsmittel wird so aufgebracht, dass die daraus hergestellte Beschichtungsschicht auf dem Substrat angeordnet ist und in direktem Kontakt mit dem Substrat steht. Zwischen Beschichtungsschicht und Substrat ist also insbesondere keine andere Schicht angeordnet. Selbiges gilt selbstverständlich für das Aufbringen eines Beschichtungsmittels (b) direkt auf eine mittels eines anderen Beschichtungsmittels (a) hergestellte Beschichtungsschicht (A) beziehungsweise die Herstellung einer Beschichtungsschicht (B) direkt auf einer anderen Beschichtungsschicht (A), die beispielsweise auf dem metallischen Substrat (S) angeordnet ist. In diesem Fall stehen die beiden Beschichtungsschichten in direktem Kontakt, sind also direkt aufeinander angeordnet. Insbesondere befindet sich keine weitere Schicht zwischen den Beschichtungsschichten (A) und (B).

Dasselbe Prinzip gilt selbstverständlich für ein direkt aufeinanderfolgendes Aufbringen von Beschichtungsmitteln beziehungsweise die Herstellung von direkt aufeinanderfolgenden Beschichtungsschichten.

Unter Ablüften, Zwischentrocknen und Härten werden im Rahmen der vorliegenden Erfindung die dem Fachmann im Zusammenhang mit Verfahren zur Herstellung von Mehrschichtlackierungen geläufigen Begriffsinhalte verstanden.

Somit versteht sich der Begriff Ablüften grundsätzlich als Bezeichnung für das Verdunsten beziehungsweise Verdunsten lassen von organischen Lösemitteln und/oder Wasser eines im Rahmen der Herstellung einer Lackierung aufgebrachten Beschichtungsmittels bei meist Umgebungstemperatur (das heißt Raumtemperatur), beispielsweise 15 bis 35°C für eine Dauer von beispielsweise 0,5 bis 30 min. Während des Ablüftens verdunsten also organische Lösemittel und/oder Wasser, die in dem aufgebrachten Beschichtungsmittel enthalten sind. Da das Beschichtungsmittel jedenfalls direkt nach dem Auftragen und zu Beginn des Ablüftens noch fließfähig ist, kann es während des Ablüftens verlaufen. Denn zumindest ein durch Spritzapplikation aufgetragenes Beschichtungsmittel wird in der Regel tröpfchenförmig und nicht in homogener Dicke aufgetragen. Es ist aber durch die enthaltenen organischen Lösemittel und/oder Wasser fließfähig und kann somit durch das Verlaufen einen homogenen, glatten Beschichtungsfilm bilden. Gleichzeitig verdunsten organische Lösemittel und/oder Wasser sukzessive, sodass nach der Ablüftphase eine vergleichsweise glatte Beschichtungsschicht entstanden ist, die im Vergleich zum aufgebrachten Beschichtungsmittel weniger Wasser und/oder Lösemittel enthält. Die Beschichtungsschicht liegt nach dem Ablüften aber noch nicht im gebrauchsfertigen Zustand vor. Sie ist zwar beispielsweise nicht mehr fließfähig, aber noch weich beziehungsweise klebrig, gegebenenfalls lediglich angetrocknet. Insbesondere ist die Beschichtungsschicht noch nicht wie weiter unten beschrieben gehärtet.

Unter Zwischentrocknen versteht man somit ebenfalls das Verdunsten beziehungsweise Verdunsten lassen von organischen Lösemitteln und/oder Wasser eines im Rahmen der Herstellung einer Lackierung aufgebrachten Beschichtungsmittels, meist bei gegenüber der Umgebungstemperatur erhöhter Temperatur von beispielsweise 40 bis 90°C, für eine Dauer von beispielsweise 1 bis 60 min. Auch beim Zwischentrocknen wird damit das aufgetragene Beschichtungsmittel einen Anteil von organischen Lösemitteln und/oder Wasser verlieren. Bezogen auf ein bestimmtes Beschichtungsmittel gilt in der Regel, dass das Zwischentrocknen im Vergleich zum Ablüften bei beispielsweise höheren Temperaturen und/oder für einen längeren Zeitraum von statten geht, sodass im Vergleich zum Ablüften auch ein höherer Anteil von organischen Lösemitteln und/oder Wasser aus der aufgebrachten Beschichtungsschicht entweicht. Aber auch durch das Zwischentrocknen erhält man keine Beschichtungsschicht im gebrauchsfertigen Zustand, das heißt keine wie weiter unten beschrieben gehärtete Beschichtungsschicht. Eine typische Abfolge von Ablüften und Zwischentrocken wäre beispielsweise, eine aufgebrachte Beschichtungsschicht für 5 min bei Umgebungstemperatur abzulüften und dann bei 80°C für 10 min zwischenzutrocken. Eine abschließende Abgrenzung beider Begriffe voneinander ist jedoch weder notwendig noch gewollt. Der reinen Übersichtlichkeit halber werden diese Begriffe verwendet, um deutlich zu machen, dass eine der unten beschriebenen Härtung vorausgehende, variable und sequenzielle Konditionierung einer Beschichtungsschicht stattfinden kann, bei der - abhängig vom Beschichtungsmittel, der Abdunsttemperatur und Abdunstdauer - ein mehr oder weniger hoher Anteil der im Beschichtungsmittel enthaltenen organischen Lösemittel und/oder Wasser abdunsten kann. Gegebenenfalls kann dabei sogar bereits ein Anteil der in den Beschichtungsmittel enthaltenen Polymere als Bindemittel wie unten beschrieben miteinander vernetzen oder verschlaufen. Sowohl beim Ablüften als auch beim Zwischentrocknen wird aber keine gebrauchsfertige Beschichtungsschicht erhalten, wie dies bei der unten beschriebenen Härtung der Fall ist. Demzufolge ist die Härtung eindeutig vom Ablüften und Zwischentrocknen abgegrenzt.

Demnach versteht sich unter Härtung einer Beschichtungsschicht die Überführung einer solchen Schicht in den gebrauchsfertigen Zustand, das heißt also in einen Zustand, in der das mit der jeweiligen Beschichtungsschicht ausgestattete Substrat transportiert, gelagert und bestimmungsgemäß verwendet werden kann. Eine gehärtete Beschichtungsschicht ist also insbesondere nicht mehr weich oder klebrig, sondern als fester Beschichtungsfilm konditioniert, der auch bei weiterer Aussetzung mit wie weiter unten beschriebenen Härtungsbedingungen seine Eigenschaften wie Härte oder Haftung auf dem Untergrund nicht mehr wesentlich ändert.

Bekanntermaßen können Beschichtungsmittel grundsätzlich physikalisch und/oder chemisch gehärtet werden, je nach enthaltenen Komponenten wie Bindemitteln und Vernetzungsmitteln. Bei der chemischen Härtung kommen die thermisch-chemische Härtung und die aktinisch-chemische Härtung in Betracht. Ein Beschichtungsmittel kann, beispielsweise sofern es thermisch-chemisch härtbar ist, selbst- und/oder fremdvernetzend sein. Unter der Angabe, dass ein Beschichtungsmittel selbst- und/oder fremdvernetzend ist, ist im Rahmen der vorliegenden Erfindung zu verstehen, dass dieses Beschichtungsmittel Polymere als Bindemittel und gegebenenfalls Vernetzungsmittel enthält, die entsprechend miteinander vernetzen können. Die zugrunde liegenden Mechanismen sowie einsetzbaren Bindemittel und Vernetzungsmittel werden weiter unten beschrieben.

Im Rahmen der vorliegenden Erfindung bedeutet "physikalisch härtbar" beziehungsweise der Begriff "physikalische Härtung" die Bildung einer gehärteten Beschichtungsschicht durch Abgabe von Lösemittel aus Polymerlösungen oder Polymerdispersionen, wobei die Härtung durch eine Verschlaufung von Polymerketten erreicht wird.

Im Rahmen der vorliegenden Erfindung bedeutet "thermisch-chemisch härtbar" beziehungsweise der Begriff "thermisch-chemische Härtung" die durch chemische Reaktion von reaktiven funktionellen Gruppen initiierte Vernetzung einer Lackschicht (Bildung einer gehärteten Beschichtungsschicht), wobei die energetische Aktivierung dieser chemischen Reaktion durch thermische Energie möglich ist. Dabei können unterschiedliche funktionelle Gruppen, die zueinander komplementär sind, miteinander reagieren (komplementäre funktionelle Gruppen) und/oder die Bildung der gehärteten Schicht beruht auf der Reaktion von autoreaktiven Gruppen, das heißt also funktionellen Gruppen, die untereinander mit Gruppen ihrer Art reagieren. Beispiele geeigneter komplementärer reaktiver funktioneller Gruppen und autoreaktiver funktioneller Gruppen sind beispielsweise aus der deutschen Patentanmeldung DE 199 30 665 A1, Seite 7, Zeile 28, bis Seite 9, Zeile 24, bekannt.

Bei dieser Vernetzung kann es sich um eine Selbstvernetzung und/oder eine Fremdvernetzung handeln. Sind beispielsweise die komplementären reaktiven funktionellen Gruppen bereits in einem als Bindemittel eingesetzten organischen Polymer, beispielsweise einem Polyester, einem Polyurethan oder einen Poly(meth)acrylat vorhanden, liegt eine Selbstvernetzung vor. Eine Fremdvernetzung liegt beispielsweise vor, wenn ein (erstes) organisches Polymer enthaltend bestimmte funktionelle Gruppen, beispielsweise Hydroxylgruppen, mit einem an sich bekannten Vernetzungsmittel, beispielsweise einem Polyisocyanat und/oder einem Melaminharz, reagiert. Das Vernetzungsmittel enthält also reaktive funktionelle Gruppen, die zu den in dem als Bindemittel eingesetzten (ersten) organischen Polymer vorhandenen reaktiven funktionellen Gruppen komplementär sind.

Insbesondere im Fall der Fremdvernetzung kommen die an sich bekannten Einkomponenten- und Mehrkomponentensysteme, insbesondere Zweikomponenten-systeme in Betracht.

In Einkomponenten-Systemen liegen die zu vernetzenden Komponenten, beispielsweise organische Polymere als Bindemittel und Vernetzungsmittel, nebeneinander, das heißt in einer Komponente, vor. Voraussetzung hierfür ist, dass die zu vernetzenden Komponenten erst bei höheren Temperaturen von beispielsweise über 100°C miteinander reagieren, das heißt Härtungsreaktionen eingehen. Andernfalls müssten die zu vernetzenden Komponenten getrennt voneinander gelagert werden und erst kurz vor dem Aufbringen auf ein Substrat miteinander vermischt werden, um eine vorzeitige zumindest anteilige thermisch-chemische Härtung zu vermeiden (vergleiche Zweikomponenten-Systeme). Als beispielhafte Kombination seien hydroxyfunktionelle Polyester und/oder Polyurethane mit Melaminharzen und/oder blockierten Polyisocyanaten als Vernetzungsmittel genannt.

In Zweikomponenten-Systemen liegen die zu vernetzenden Komponenten, beispielsweise die organischen Polymere als Bindemittel und die Vernetzungsmittel, getrennt voneinander in mindestens zwei Komponenten vor, die erst kurz vor der Applikation zusammengegeben werden. Diese Form wird dann gewählt, wenn die zu vernetzenden Komponenten bereits bei Umgebungstemperaturen oder leicht erhöhten Temperaturen von beispielsweise 40 bis 90°C miteinander reagieren. Als beispielhafte Kombination seien hydroxyfunktionelle Polyester und/oder Polyurethane und/oder Poly(meth)acrylate mit freien Polyisocyanaten als Vernetzungsmittel genannt.

Es ist auch möglich, dass ein organisches Polymer als Bindemittel sowohl selbstvernetzende als auch fremdvernetzende funktionelle Gruppen aufweist und dann mit Vernetzungsmitteln kombiniert wird.

Im Rahmen der vorliegenden Erfindung ist unter "aktinisch-chemisch härtbar" beziehungsweise dem Begriff "aktinisch-chemische Härtung" die Tatsache zu verstehen, dass die Härtung unter Anwendung aktinischer Strahlung, nämlich elektromagnetischer Strahlung wie nahes Infrarot (NIR) und UV-Strahlung, insbesondere UV-Strahlung, sowie Korpuskularstrahlung wie Elektronenstrahlung zur Härtung möglich ist. Die Härtung durch UV-Strahlung wird üblicherweise durch radikalische oder kationische Photoinitiatoren initiiert. Typische aktinisch härtbare funktionelle Gruppen sind Kohlenstoff-Kohlenstoff-Doppelbindungen, wobei hierbei in der Regel radikalische Photoinitiatoren zum Einsatz kommen. Der aktinischen Härtung liegt also ebenfalls eine chemische Vernetzung zugrunde.

Selbstverständlich wird bei der Härtung eines als chemisch härtbar gekennzeichnetes Beschichtungsmittel immer auch eine physikalische Härtung, das heißt eine Verschlaufung von Polymerketten, auftreten. Trotzdem wird ein solches Beschichtungsmittel dann als chemisch härtbar bezeichnet.

Aus Obigem folgt, dass je nach Art des Beschichtungsmittels und den darin enthaltenen Komponenten eine Härtung durch unterschiedliche Mechanismen bewirkt wird, die selbstverständlich auch unterschiedliche Bedingungen bei der Härtung notwendig machen, insbesondere unterschiedliche Härtungstemperaturen und Härtungsdauern.

Im Falle eines rein physikalisch härtenden Beschichtungsmittels erfolgt eine Härtung bevorzugt zwischen 15 und 90°C über einen Zeitraum von 2 bis 48 Stunden. In diesem Fall unterscheidet sich die Härtung vom Ablüften und/oder Zwischentrocken also gegebenenfalls lediglich durch die Dauer der Konditionierung der Beschichtungsschicht. Eine Differenzierung zwischen Ablüften und Zwischentrocknen ist zudem nicht sinnvoll. Möglich wäre beispielsweise, eine durch Aufbringen eines physikalisch härtbaren Beschichtungsmittels hergestellte Beschichtungsschicht zunächst bei 15 bis 35°C für eine Dauer von beispielsweise 0,5 bis 30 min abzulüften beziehungsweise zwischenzutrocknen und anschließend bei 50°C für eine Dauer von 5 Stunden zu härten.

Bevorzugt sind die im Rahmen des erfindungsgemäßen Verfahrens einzusetzenden Beschichtungsmittel, das heißt Elektrotauchlacke, wässrige Basislacke und Klarlacke aber jedenfalls thermisch-chemisch härtbar, insbesondere bevorzugt thermisch-chemisch härtbar und fremdvernetzend.

Grundsätzlich gilt dabei, dass die Härtung von Einkomponenten-Systemen beispielsweise bei Temperaturen von 100 bis 250°C für eine Dauer von 5 bis 60 min, bevorzugt 10 bis 45 min durchgeführt wird, da diese Bedingungen in der Regel notwendig sind, um die Beschichtungsschicht durch chemische Vernetzungsreaktionen in eine gehärtete Beschichtungsschicht zu überführen. Dementsprechend gilt, dass eine vor der Härtung stattfindende Ablüft- und/oder Zwischentrockungsphase bei geringeren Temperaturen und/oder für kürzere Zeiten erfolgt. Beispielsweise kann in einem solchen Fall bei 15 bis 35°C für eine Dauer von beispielsweise 0,5 bis 30 min abgelüftet werden und/oder bei einer Temperatur von beispielsweise 40 bis 90°C für eine Dauer von beispielsweise 1 bis 60 min zwischengetrocknet werden.

Grundsätzlich und im Rahmen der vorliegenden Erfindung gilt, dass die Härtung von Zweikomponenten-Systemen bei Temperaturen von beispielsweise 15 bis 90°C, bevorzugt 40 bis 90°C für eine Dauer von 5 bis 80 min, bevorzugt 10 bis 50 min durchgeführt wird. Dementsprechend gilt, dass eine vor der Härtung stattfindende Ablüft- und/oder Zwischentrockungsphase bei geringeren Temperaturen und/oder für kürzere Zeiten erfolgt. Beispielsweise ist es in einem solchen Fall nicht mehr sinnvoll, zwischen den Begriffen Abdunsten und Zwischentrocken zu unterscheiden. Eine der Härtung vorausgehende Ablüft- beziehungsweise Zwischentrockungsphase kann beispielsweise bei 15 bis 35°C für eine Dauer von beispielsweise 0,5 bis 30 min ablaufen, jedoch jedenfalls bei geringeren Temperaturen und/oder für geringere Zeiten als die dann folgende Härtung.

Dies schließt natürlich nicht aus, dass ein Zweikomponenten-System bei höheren Temperaturen gehärtet wird. Beispielsweise werden im weiter unten genauer beschriebenen Schritt (4) des erfindungsgemäßen Verfahrens eine Basislackschicht oder mehrere Basislackschichten gemeinsam mit einer Klarlackschicht gehärtet. Sind innerhalb der Schichten sowohl Einkomponenten- als auch Zweikomponenten-Systeme vorhanden, beispielsweise ein Einkomponenten-Basislack und ein Zweikomponenten-Klarlack, so richtet sich die gemeinsame Härtung selbstverständlich nach den für das Einkomponenten-System notwendigen Härtungsbedingungen.

Ähnlich wie der Begriff "Härtung" im Zusammenhang mit einem Beschichtungsmittel und einer Beschichtungsschicht, ist der Begriff "Gelierung" im Zusammenhang mit der PVC-Paste zu verstehen. Durch die Gelierung wird die aufgebrachte PVC-Paste in den gebrauchsfertigen Zustand überführt, das heißt einen Zustand, in dem das PVC seine bestimmungsgemäßen Eigenschaften und Funktionen erlangt hat, insbesondere in finaler und verfestigter Form eine entsprechende Abdichtung von Nähten bewirkt.

Im Rahmen der vorliegenden Erfindung und im Einklang mit der einleitend beschriebenen Aufgabe ist es bevorzugt, dass der thermisch initiierte Gelierungsschritt gemäß Schritt (2) des Verfahrens bei Temperaturen von mindestens 145°C, nochmals bevorzugt mindestens 150°C, insbesondere mindestens 155°C durchgeführt wird. Gängige Zeiträume, um eine vollständige Gelierung zu bewirken, sind von 5 bis 60 min, bevorzugt 10 bis 45 min.

Allerdings ist es ebenfalls bevorzugt, dass im Rahmen des erfindungsgemäßen Verfahrens alle Härtungsschritte von Beschichtungsmitteln, die nach Schritt (2) des erfindungsgemäßen Verfahrens durchgeführt werden, bei Temperaturen von weniger als 150°C, besonders bevorzugt von weniger als 145°C durchgeführt werden.

Alle im Rahmen der vorliegenden Erfindung erläuterten Temperaturen verstehen sich als Temperatur des Objekts (das heißt des beschichteten Substrats).

Wird im Rahmen der vorliegenden Erfindung auf eine offizielle Norm ohne Hinweis auf den offiziellen Gültigkeitszeitraum verwiesen, ist hiermit selbstverständlich die zum Anmeldetag geltende Fassung der Norm oder, falls zu diesem Zeitpunkt keine geltende Fassung besteht, die letzte geltende Fassung gemeint.

### Das erfindungsgemäße Verfahren

Im Rahmen des erfindungsgemäßen Verfahrens wird eine Mehrschichtlackierung auf einer metallischen Karosse (K) aufgebaut.

Als metallische Substrate der Karosse (K) kommen grundsätzlich Substrate enthaltend oder bestehend aus beispielsweise Eisen, Aluminium, Kupfer, Zink, Magnesium und deren Legierungen sowie Stahl in unterschiedlichsten Formen und Zusammensetzungen in Betracht. Bevorzugt sind Eisen- und Stahlsubstrate, beispielsweise typische Eisen- und Stahlsubstrate wie sie im Bereich der Automobilindustrie eingesetzt werden. Die Substrate können an sich beliebig geformt sein, das heißt es kann sich beispielsweise um einfache Bleche oder auch um komplexe Bauteile wie insbesondere Automobilkarosserien und Teile davon handeln.

Die metallischen Substrate (S) können vor der Stufe (1) des erfindungsgemäßen Verfahrens auf an sich bekannte Weise vorbehandelt werden, das heißt beispielsweise gereinigt und/oder mit bekannten Konversionsbeschichtungen versehen werden. Eine Reinigung kann mechanisch beispielsweise mittels Wischen, Schleifen und/oder Polieren und/oder chemisch mittels Beizverfahren durch Anätzen in Säure- oder Laugenbädern, beispielsweise mittels Salz- oder Schwefelsäure erfolgen. Auch die Reinigung mit organischen Lösemitteln oder wässrigen Reinigern ist natürlich möglich. Eine Vorbehandlung durch Aufbringen von Konversionsbeschichtungen, insbesondere mittels Phosphatierung und/oder Chromatierung, bevorzugt Phosphatierung kann ebenfalls stattfinden. Bevorzugt werden die metallischen Substrate jedenfalls konversionsbeschichtet, insbesondere phosphatiert, bevorzugt mit einer Zinkphosphatierung versehen.

Die metallische Karosse (K) weist gemeinhin bekannte Karosserienähte (Kn) auf, die auf den zugrundeliegenden Produktionsprozess (Zusammenfügen von Einzelbauteilen und mindestens punktuelles Verschweißen von Einzelteilen) zurückgehen.

In Stufe (1) des erfindungsgemäßen Verfahrens wird durch elektrophoretisches Aufbringen eines Elektrotauchlacks (e.1) auf das Substrat (S) und anschließende Härtung des Elektrotauchlacks (e.1) eine gehärtete Elektrotauchlackschicht (E.1) auf dem metallischen Substrat (S) hergestellt.

Der in Stufe (1) des erfindungsgemäßen Verfahrens eingesetzte Elektrotauchlack (e.1) kann ein kathodischer oder anodischer Elektrotauchlack sein. Bevorzugt handelt es sich um einen kathodischen Elektrotauchlack. Elektrotauchlacke sind dem Fachmann seit langem bekannt. Es handelt sich um wässrige Beschichtungsstoffe, die anionische oder kationische Polymere als Bindemittel enthalten. Diese Polymere enthalten funktionelle Gruppen, die potentiell anionisch sind, das heißt in anionische Gruppen überführt werden können, beispielsweise Carbonsäuregruppen, oder funktionelle Gruppen, die potentiell kationisch sind, das heißt in kationische Gruppen überführt werden können, beispielsweise Aminogruppen. Die Überführung in geladene Gruppen wird in der Regel durch den Einsatz entsprechender Neutralisationsmittel (organische Amine (anionisch), organische Carbonsäuren wie Ameisensäure (kationisch)) erreicht, wodurch dann die anionischen oder kationischen Polymere entstehen. Die Elektrotauchlacke enthalten in der Regel und damit bevorzugt zusätzlich typische Korrosionsschutzpigmente. Die im Rahmen der Erfindung bevorzugten kathodischen Elektrotauchlacke enthalten bevorzugt kationische Polymere als Bindemittel, insbesondere hydroxyfunktionelle Polyetheramine, welche bevorzugt aromatische Struktureinheiten aufweisen. Solche Polymere werden in der Regel durch Umsetzung entsprechender Bisphenol-basierter Epoxidharze mit Aminen wie beispielsweise Mono- und Dialkylaminen, Alkanolaminen und/oder Dialkylaminoalkylamine erhalten. Diese Polymere werden insbesondere in Kombination mit an sich bekannten blockierten Polyisocyanaten eingesetzt. Beispielhaft sei auf die in WO 9833835 A1, WO 9316139 A1, WO 0102498 A1 und WO 2004018580 A1 beschriebenen Elektrotauchlacke verwiesen.

Der Elektrotauchlack (e.1) ist also bevorzugt ein jedenfalls chemisch-thermisch härtbares Beschichtungsmittel, wobei er insbesondere fremdvernetzend ist. Bevorzugt ist der Elektrotauchlack (e.1) ein Einkomponenten-Beschichtungsmittel. Bevorzugt enthält der Elektrotauchlack (e.1) ein hydroxyfunktionelles Epoxidharz als Bindemittel und ein vollständig blockiertes Polyisocyanat als Vernetzungsmittel. Das Epoxidharz ist bevorzugt kathodisch, wobei es insbesondere Aminogruppen enthält.

Auch das im Rahmen der Stufe (1) des erfindungsgemäßen Verfahrens stattfindende elektrophoretische Aufbringen eines solchen Elektrotauchlacks (e.1) ist bekannt. Das Aufbringen verläuft elektrophoretisch. Das heißt, dass zu beschichtende metallische Werkstück wird zunächst in ein den Lack enthaltenes Tauchbad getaucht und ein elektrisches Gleichspannungsfeld wird zwischen dem metallischen Werkstück und einer Gegenelektrode angelegt. Das Werkstück fungiert also als Elektrode, die nichtflüchtigen Bestandteile des Elektrotauchlacks migrieren bedingt durch die beschriebene Ladung der als Bindemittel eingesetzten Polymere durch das elektrische Feld zum Substrat und scheiden sich auf dem Substrat ab, wodurch eine Elektrotauchlackschicht entsteht. Beispielsweise im Fall eines kathodischen Elektrotauchlacks wird das Substrat also als Kathode geschaltet, die dort durch die Wasserelektrolyse entstehenden Hydroxidionen neutralisieren das kationische Bindemittel, sodass es auf dem Substrat abgeschieden wird und sich eine Elektrotauchlackschicht bildet. Es handelt sich dann also um ein Aufbringen durch das elektrophoretische Tauchverfahren.

Nach dem elektrolytischen Aufbringen des Elektrotauchlacks (e.1) wird das beschichtete Substrat (S) aus dem Becken entfernt, gegebenenfalls mit beispielsweise wasserbasierten Spüllösungen abgespült, dann gegebenenfalls abgelüftet und/oder zwischengetrocknet, und schließlich wird der aufgetragene Elektrotauchlack gehärtet.

Der aufgebrachte Elektrotauchlack (e.1) (beziehungsweise die aufgebrachte, noch nicht gehärtete Elektrotauchlackschicht) wird beispielsweise bei 15 bis 35°C für eine Dauer von beispielsweise 0,5 bis 30 min abgelüftet und/oder bei einer Temperatur von bevorzugt 40 bis 90°C für eine Dauer von beispielsweise 1 bis 60 min zwischengetrocknet.

Der auf das Substrat aufgebrachte Elektrotauchlack (e.1) (beziehungsweise die aufgebrachte, noch nicht gehärtete Elektrotauchlackschicht) wird bevorzugt bei Temperaturen von 100 bis 250°C, bevorzugt 140 bis 220°C für eine Dauer von 5 bis 60 min, bevorzugt 10 bis 45 min gehärtet, wodurch die gehärtete Elektrotauchlackschicht (E.1) hergestellt wird.

Die angegebenen Ablüft-, Zwischentrocknungs- und Härtungsbedingungen gelten insbesondere für den bevorzugten Fall, dass es sich bei dem Elektrotauchlack (e.1) um ein wie oben beschriebenes chemisch-thermisch härtbares Einkomponenten-Beschichtungsmittel handelt. Dies schließt aber nicht aus, dass der Elektrotauchlack ein auf andere Weise härtbares Beschichtungsmittel ist und/oder andere Ablüft-, Zwischentrocknungs- und Härtungsbedingungen eingesetzt werden.

Die Schichtdicke der gehärteten Elektrotauchlackschicht beträgt beispielsweise 10 bis 40 Mikrometer, bevorzugt 10 bis 25 Mikrometer. Alle im Rahmen der vorliegenden Erfindung angegebenen Schichtdicken verstehen sich als Trockenschichtdicken. Es handelt sich also um die Schichtdicke der jeweils gehärteten Schicht. Ist also angegeben, dass ein Lack in einer bestimmten Schichtdicke aufgetragen wird, so ist darunter zu verstehen, dass der Lack so aufgetragen wird, dass die genannte Schichtdicke nach der Härtung resultiert.

In Stufe (2) des erfindungsgemäßen Verfahrens wird in einem Bereich der Karosserienähte (Kn) eine gelierte PVC-Abdichtung hergestellt. Bevorzugt wird die Abdichtung im gesamten Bereich der Karosserienähte hergestellt. Die Herstellung erfolgt durch Aufbringen einer PVC-Abdichtungspaste (p.2) auf die gehärtete Elektrotauchlackschicht (E.1) in dem entsprechenden Bereich der Karosserienähte und anschließende thermisch initiierte Gelierung der Paste.

Art und Form der PVC-Paste sind grundsätzlich keinerlei Einschränkung unterlegen und können vom Fachmann je nach Einzelfall ausgewählt werden. Für den hier gegebenen Anwendungsfall mögliche und verfügbare PVC-Pasten sowie entsprechende Applikations- und Gelierungsprozesse sind dem Fachmann bekannt und bedürfen keiner weiteren Erläuterung. Bevorzugt ist allerdings, dass die PVC-Paste eine Gelierungstemperatur von mindestens 145°C, nochmals bevorzugt mindestens 150°C, insbesondere mindestens 155°C besitzt. Bekanntermaßen sind solche PVC-Pasten signifikant kostengünstiger als die verfügbaren Alternativen mit niedrigeren Gelierungstemperaturen.

Mit Gelierungstemperatur ist die Mindesttemperatur gemeint, die eine entsprechende PVC-Paste benötigt, um innerhalb eines Zeitraums von 15 min zu gelieren (Definition von gelieren oder Gelierung siehe oben).

Wie beschrieben, wird das erfindungsgemäße Verfahren bevorzugt in einer auf ein Standard-Verfahren (5A-Verfahren) ausgerichteten Anlage (Standard-Anlage) durchgeführt. Entsprechend bevorzugt ist es, dass die Gelierung der PVC-Paste in dem in einer Standard-Anlage vorhandenen Bereich zur Füllerhärtung stattfindet.

In Stufe (3) des erfindungsgemäßen Verfahrens wird (3.1) eine Basislackschicht (B.3.1) hergestellt oder (3.2) es werden mehrere direkt aufeinander folgende Basislackschichten (B.3.2.x) hergestellt. Die Herstellung der Schichten erfolgt durch Aufbringen (3.1) eines wässrigen Basislacks (b.3.1) direkt auf die gemäß Schritt (2) erhaltene Oberfläche oder (3.2) direkt aufeinanderfolgendes Aufbringen von mehreren Basislacken (b.3.2.x) auf diese Oberfläche. Bevorzugt ist im Rahmen der vorliegenden Erfindung die erste Variante des erfindungsgemäßen Verfahrens (Herstellung nur einer Basislackschicht, nämlich der Basislackschicht (B.3.1).

Das direkt aufeinanderfolgende Aufbringen von mehreren Basislacken (b.3.2.x) auf die diese Oberfläche versteht sich also so, dass zunächst ein erster Basislack direkt auf die Oberfläche aufgebracht wird und danach ein zweiter Basislack direkt auf die Schicht aus dem ersten Basislack aufgebracht wird. Ein gegebenenfalls dritter Basislack wird dann direkt auf die Schicht aus dem zweiten Basislack aufgebracht. Dieser Vorgang lässt sich dann analog für weitere Basislacke (das heißt einen vierten, fünften usw. Basislack) wiederholen.

Die Basislackschicht (B.3.1) oder die erste Basislackschicht (B.3.2.x) ist nach der Herstellung also direkt auf der genannten Oberfläche angeordnet.

Die Begriffe Basislack und Basislackschicht in Bezug auf die in Stufe (3) des erfindungsgemäßen Verfahrens aufgebrachten Beschichtungsmittel und hergestellten Beschichtungsschichten werden der besseren Übersichtlichkeit halber verwendet. Die Basislackschichten (B.3.1) und (B.3.2.x) werden nicht separat gehärtet, sondern gemeinsam mit dem Klarlack gehärtet. Die Härtung erfolgt also analog der Härtung von in dem einleitend beschriebenen Standardverfahren eingesetzten so genannten Basislacken. Insbesondere werden die in Stufe (3) des erfindungsgemäßen Verfahrens eingesetzten Beschichtungsmittel nicht wie die im Rahmen des Standardverfahrens als Füller bezeichneten Beschichtungsmittel separat gehärtet.

Der in Stufe (3.1) eingesetzte wässrige Basislack (b.3.1) wird weiter unten im Detail beschrieben. Er ist jedoch bevorzugt jedenfalls chemisch-thermisch härtbar, wobei er dabei insbesondere fremdvernetzend ist. Bevorzugt ist der Basislack (b.3.1) ein Einkomponenten-Beschichtungsmittel. Bevorzugt enthält der Basislack (b.3.1) eine Kombination aus mindestens einem hydroxyfunktionellen Polymer als Bindemittel ausgewählt aus der Gruppe bestehend aus Polyurethanen, Polyestern, Polyacrylaten und Mischpolymerisaten der genannten Polymere, beispielsweise Polyurethan-Polyacrylaten, sowie mindestens einem Melaminharz als Vernetzungsmittel.

Der Basislack (b.3.1) kann durch die dem Fachmann bekannten Methoden zur Applikation von flüssigen Beschichtungsmitteln aufgebracht werden, beispielsweise durch Tauchen, Rakeln, Spritzen, Walzen oder ähnlichem. Vorzugsweise werden Spritzapplikationsmethoden angewandt, wie zum Beispiel Druckluftspritzen (pneumatische Applikation), Airless-Spritzen, Hochrotation, elektrostatischer Sprühauftrag (ESTA), gegebenenfalls verbunden mit Heißspritzapplikation wie zum Beispiel Hot-Air (Heiß-Spritzen). Ganz besonders bevorzugt wird der Basislack (b.3.1) über die pneumatische Spritzapplikation oder die elektrostatische Spritzapplikation aufgetragen. Durch die Applikation des Basislacks (b.3.1) wird somit eine Basislackschicht (B.3.1) hergestellt.

Der aufgebrachte Basislack (b.3.1) beziehungsweise die entsprechende Basislackschicht (B.3.1) wird nach dem Auftrag beispielsweise bei 15 bis 35°C für eine Dauer von beispielsweise 0,5 bis 30 min abgelüftet und/oder bei einer Temperatur von bevorzugt 40 bis 90°C für eine Dauer von beispielsweise 1 bis 60 min zwischengetrocknet. Bevorzugt wird zunächst bei 15 bis 35°C für eine Dauer von 0,5 bis 30 min abgelüftet und anschließend bei 40 bis 90°C für eine Dauer von beispielsweise 1 bis 60 min zwischengetrocknet. Die beschriebenen Ablüft- und Zwischentrockungsbedingungen gelten insbesondere für den bevorzugten Fall, dass es sich bei dem Basislack (b.3.1) um ein chemisch-thermisch härtbares Einkomponenten-Beschichtungsmittel handelt. Dies schließt aber nicht aus, dass der Basislack (b.3.1) ein auf andere Weise härtbares Beschichtungsmittel ist und/oder andere Ablüft- und/oder Zwischentrocknungsbedingungen eingesetzt werden.

Die Basislackschicht (B.3.1) wird innerhalb der Stufe (3) des erfindungsgemäßen Verfahrens nicht gehärtet, das heißt bevorzugt nicht Temperaturen von über 100°C für eine Dauer von länger als 1 min ausgesetzt, insbesondere bevorzugt gar nicht Temperaturen von über 100°C ausgesetzt. Dies ergibt sich eindeutig und unmittelbar aus der weiter unten beschriebenen Stufe (4) des erfindungsgemäßen Verfahrens. Da die Basislackschicht erst in der Stufe (4) gehärtet wird, kann sie nicht bereits in der Stufe (3) gehärtet werden, denn dann wäre die Härtung in Stufe (4) nicht mehr möglich.

Auch die in Stufe (3.2) des erfindungsgemäßen Verfahrens eingesetzten wässrigen Basislacke (b.3.2.x) werden weiter unten im Detail beschrieben. Mindestens einer der in Stufe (3.2), bevorzugt alle der in Stufe (3.2) eingesetzten Basislacke (b.3.2.x) sind aber bevorzugt jedenfalls chemisch-thermisch härtbar, insbesondere bevorzugt fremdvernetzend. Bevorzugt ist mindestens ein Basislack (b.3.2.x) ein Einkomponenten-Beschichtungsmittel, bevorzugt gilt dies für alle Basislacke (b.3.2.x). Bevorzugt enthält mindestens einer der Basislacke (b.3.2.x) eine Kombination aus mindestens einem hydroxyfunktionellen Polymer als Bindemittel ausgewählt aus der Gruppe bestehend aus Polyurethanen, Polyestern, Polyacrylaten und Mischpolymerisaten der genannten Polymere, beispielsweise Polyurethan-Polyacrylaten, sowie mindestens einem Melaminharz als Vernetzungsmittel. Bevorzugt gilt dies für alle Basislacke (b.3.2.x).

Die Basislacke (b.3.2.x) können durch die dem Fachmann bekannten Methoden zur Applikation von flüssigen Beschichtungsmitteln aufgebracht werden, beispielsweise durch Tauchen, Rakeln, Spritzen, Walzen oder ähnlichem. Vorzugsweise werden Spritzapplikationsmethoden angewandt, wie zum Beispiel Druckluftspritzen (pneumatische Applikation), Airless-Spritzen, Hochrotation, elektrostatischer Sprühauftrag (ESTA), gegebenenfalls verbunden mit Heißspritzapplikation wie zum Beispiel Hot-Air (Heiß-Spritzen). Ganz besonders bevorzugt werden die Basislacke (b.3.2.x) über die pneumatische Spritzapplikation und/oder die elektrostatische Spritzapplikation aufgetragen.

Im Rahmen der Stufe (3.2) des erfindungsgemäßen Verfahrens bietet sich die folgende Benennung an. Die Basislacke und Basislackschichten werden allgemein durch (b.3.2.x) und (B.3.2.x) gekennzeichnet, während bei der Benennung der konkreten einzelnen Basislacke und Basislackschichten das x durch entsprechend passende andere Buchstaben ersetzt werden kann.

Der erste Basislack und die erste Basislackschicht können mit a gekennzeichnet werden, der oberste Basislack und die oberste Basislackschicht können mit z gekennzeichnet werden. Diese beiden Basislacke beziehungsweise Basislackschichten sind in der Stufe (3.2) jedenfalls vorhanden. Gegebenenfalls dazwischen angeordnete Schichten können fortlaufend mit b, c, d und so weiter gekennzeichnet werden.

Durch die Applikation des ersten Basislacks (b.3.2.a) wird somit eine Basislackschicht (B.3.2.a) direkt auf der gehärteten Elektrotauchlackschicht (E.1) hergestellt. Die mindestens eine weitere Basislackschicht (B.3.2.x) wird dann direkt auf der Basislackschicht (B.3.2.a) hergestellt. Sofern mehrere weitere Basislackschichten (B.3.2.x) hergestellt werden, werden diese direkt aufeinanderfolgend hergestellt. Beispielsweise kann noch genau eine weitere Basislackschicht (B.3.2.x) hergestellt werden, wobei diese dann in der letztlich hergestellten Mehrschichtlackierung direkt unterhalb der Klarlackschicht (K) angeordnet ist und somit als Basislackschicht (B.3.2.z) bezeichnet werden kann. Möglich ist beispielsweise auch, dass zwei weitere Basislackschichten (B.3.2.x) hergestellt werden, wobei dann die direkt auf der Basislackschicht (B.3.2.a) hergestellte Schicht als (B.3.2.b) und die schließlich direkt unterhalb der Klarlackschicht (K) angeordnete Schicht wiederum als (B.3.2.z) bezeichnet werden kann.

Die Basislacke (b.3.2.x) können identisch oder verschieden sein. Möglich ist auch, mehrere Basislackschichten (B.3.2.x) mit demselben Basislack und eine oder mehrere weitere Basislackschichten (B.3.2.x) mit einem oder mehreren anderen Basislacken herzustellen.

Die aufgebrachten Basislacke (b.3.2.x) werden in der Regel für sich und/oder miteinander abgelüftet und/oder zwischengetrocknet. Bevorzugt wird auch im Rahmen der Stufe (3.2) bei 15 bis 35°C für eine Dauer von 0,5 bis 30 min abgelüftet und bei 40 bis 90°C für eine Dauer von beispielsweise 1 bis 60 min zwischengetrocknet. Die Abfolge von Ablüften und/oder Zwischentrocknen einzelner oder mehrerer Basislackschichten (B.3.2.x) kann dabei je nach den Anforderungen des Einzelfalls angepasst werden. Die vorbeschriebenen bevorzugten Ablüft- und Zwischentrockungsbedingungen gelten insbesondere für den bevorzugten Fall, dass es sich bei mindestens einem Basislack (b.3.2.x), bevorzugt allen Basislacken (b.3.2.x) um chemisch-thermisch härtbare Einkomponenten-Beschichtungsmittel handelt. Dies schließt aber nicht aus, dass die Basislacke (b.3.2.x) auf andere Weise härtbare Beschichtungsmittel sind und/oder andere Ablüft- und/oder Zwischentrocknungsbedingungen eingesetzt werden.

Die Basislackschichten (B.3.2.x) werden innerhalb der Stufe (2) des erfindungsgemäßen Verfahrens nicht gehärtet, das heißt bevorzugt nicht Temperaturen von über 100°C für eine Dauer von länger als 1 min ausgesetzt, bevorzugt gar nicht Temperaturen von über 100°C ausgesetzt. Dies ergibt sich eindeutig und unmittelbar aus der weiter unten beschriebenen Stufe (5) des erfindungsgemäßen Verfahrens. Da die Basislackschichten erst in der Stufe (5) gehärtet werden, können sie nicht bereits in der Stufe (3) gehärtet werden, denn dann wäre die Härtung in Stufe (5) nicht mehr möglich.

Der Auftrag der Basislacke (b.3.1) und (b.3.2.x) erfolgt so, dass die Basislackschicht (B.3.1) und die einzelnen Basislackschichten (B.3.2.x) nach der in Stufe (5) erfolgten Härtung eine Schichtdicke von beispielsweise 5 bis 40 Mikrometer, bevorzugt 6 bis 35 Mikrometer, aufweisen. In der Stufe (2.1) werden bevorzugt höhere Schichtdicken von 15 bis 40 Mikrometern, bevorzugt 20 bis 35 Mikrometern hergestellt. In der Stufe (3.2) haben die einzelnen Basislackschichten eher vergleichsweise geringere Schichtdicken, wobei der Gesamtaufbau dann wieder Schichtdicken aufweist, die in der Größenordnung der einen Basislackschicht (B.3.1) liegen. Beispielsweise hat im Falle von zwei Basislackschichten die erste Basislackschicht (B.3.2.a) bevorzugt Schichtdicken von 5 bis 35, insbesondere 10 bis 30 Mikrometer, die zweite Basislackschicht (B.3.2.z) bevorzugt Schichtdicken von 5 bis 30 Mikrometern, insbesondere 10 bis 25 Mikrometern.

In Stufe (4) des erfindungsgemäßen Verfahrens wird eine Klarlackschicht (K) direkt auf (4.1) der Basislackschicht (B.3.1) oder (4.2) der obersten Basislackschicht (B.3.2.z) hergestellt. Diese Herstellung erfolgt durch entsprechendes Aufbringen eines Klarlacks (k).

Bei dem Klarlack (k) kann es sich um ein dem Fachmann in diesem Sinne bekanntes an sich beliebiges transparentes Beschichtungsmittel handeln. Es handelt sich dabei um wässrige oder lösemittelhaltige transparente Beschichtungsmittel, die sowohl als Einkomponenten- als auch als Zwei- oder Mehrkomponenten-Beschichtungsmittel formuliert sein können. Geeignet sind ferner auch Pulverslurry-Klarlacke. Bevorzugt sind lösungsmittelbasierte Klarlacke.

Die eingesetzten Klarlacke (k) können insbesondere chemisch-thermisch und/oder chemisch-aktinisch härtbar sein. Insbesondere sind sie chemisch-thermisch härtbar und fremdvernetzend. Bevorzugt sind Zweikomponenten-Klarlacke.

Die transparenten Beschichtungsmittel enthalten also üblicherweise und bevorzugt mindestens ein (erstes) Polymer als Bindemittel mit funktionellen Gruppen sowie mindestens einen Vernetzer mit einer zu den funktionellen Gruppen des Bindemittels komplementärer Funktionalität. Bevorzugt wird zumindest ein hydroxyfunktionelles Poly(meth)acrylatpolymer als Bindemittel und ein Polyisocyanat als Vernetzungsmittel eingesetzt.

Geeignete Klarlacke sind beispielsweise beschrieben in WO 2006042585 A1, WO 2009077182 A1 oder auch WO 2008074490 A1.

Der Klarlack (k) wird durch die dem Fachmann bekannten Methoden zur Applikation von flüssigen Beschichtungsmitteln aufgebracht, beispielsweise durch Tauchen, Rakeln, Spritzen, Walzen oder ähnlichem. Vorzugsweise werden Spritzapplikationsmethoden angewandt, wie zum Beispiel Druckluftspritzen (pneumatische Applikation), und elektrostatischer Sprühauftrag (ESTA).

Der Klarlack (k) beziehungsweise die entsprechende Klarlackschicht (K) wird nach dem Auftrag bevorzugt bei 15 bis 35°C für eine Dauer von 0,5 bis 30 min abgelüftet beziehungsweise zwischengetrocknet. Solche Ablüft- beziehungsweise Zwischentrockungsbedingungen gelten insbesondere für den bevorzugten Fall, dass es sich bei dem Klarlack (k) um ein chemisch-thermisch härtbares Zweikomponenten-Beschichtungsmittel handelt. Dies schließt aber nicht aus, dass der Klarlack (k) ein auf andere Weise härtbares Beschichtungsmittel ist und/oder andere Ablüftbeziehungsweise Zwischentrockungsbedingungen eingesetzt werden.

Der Auftrag des Klarlacks (k) erfolgt so, dass die Klarlackschicht nach der in Stufe (5) erfolgten Härtung eine Schichtdicke von beispielsweise 15 bis 80 Mikrometer, bevorzugt 20 bis 65 Mikrometer, insbesondere bevorzugt 25 bis 60 Mikrometer aufweist.

Selbstverständlich ist im Rahmen des erfindungsgemäßen Verfahrens nicht ausgeschlossen, dass nach der Applikation des Klarlacks (k) noch weitere Beschichtungsmittel, beispielsweise weitere Klarlacke, aufgebracht werden und auf diese Weise weitere Beschichtungsschichten, beispielsweise weitere Klarlackschichten, hergestellt werden. Solche weiteren Beschichtungsschichten werden dann ebenfalls in der nachstehend beschriebenen Stufe (5) gehärtet. Bevorzugt wird allerdings nur der eine Klarlack (k) aufgebracht und dann wie in Stufe (4) beschrieben gehärtet.

In Stufe (5) des erfindungsgemäßen Verfahrens erfolgt eine gemeinsame Härtung der der (5.1) Basislackschicht (B.3.1) und der Klarlackschicht (K) oder (5.2) der Basislackschichten (B.3.2.x) und der Klarlackschicht (K).

Die gemeinsame Härtung erfolgt bevorzugt bei Temperaturen von 100 bis 180°C, bevorzugt 100 bis 150°C, nochmals bevorzugt 100 bis 145°C, für eine Dauer von 5 bis 60 min, bevorzugt 10 bis 45 min. Solche Härtungsbedingungen gelten insbesondere für den bevorzugten Fall, dass die Basislackschicht (B.2.1) oder mindestens eine der Basislackschichten (B.2.2.x), bevorzugt alle Basislackschichten (B.2.2.x) auf einem chemisch-thermisch härtbaren Einkomponenten-Beschichtungsmittel basieren. Denn wie oben beschrieben werden solche Bedingungen in der Regel benötigt, um eine wie oben beschriebene Härtung eines solchen Einkomponenten-Beschichtungsmittels zu erreichen. Handelt es sich bei dem Klarlack (k) beispielsweise ebenfalls um ein chemisch-thermisch härtbares Einkomponenten-Beschichtungsmittel, wird die entsprechende Klarlackschicht (K) bei diesen Bedingungen selbstverständlich ebenfalls gehärtet. Selbiges gilt augenscheinlich für den bevorzugten Fall, dass der Klarlack (k) chemisch-thermisch härtbares Zweikomponenten-Beschichtungsmittel ist.

Das zuvor Gesagte schließt aber nicht aus, dass die Basislacke (b.3.1) und (b.3.2.x) sowie die Klarlacke (k) auf andere Weise härtbare Beschichtungsmittel sind und/oder andere Härtungsbedingungen eingesetzt werden.

Nach Beendigung der Stufe (5) des erfindungsgemäßen Verfahrens resultiert eine erfindungsgemäße Mehrschichtlackierung.

Für die bevorzugte erste Variante des erfindungsgemäßen Verfahrens (Herstellung nur einer Basislackschicht, nämlich der Basislackschicht (B.3.1)) gelten zudem folgende bevorzugte Bedingungen. Die Gesamtschichtdicke (Trockenschichtdicke) des Komplettaufbaus von Elektrotauchlackschicht (E.1), Basislackschicht (B.3.1) und Klarlackschicht (K) beträgt von 70 bis 110 Mikrometer, bevorzugt 80 bis 100 Mikrometer. Weiterhin bevorzugt ist, dass das Verhältnis der Schichtdicke der Basislackschicht (B.3.1) zur Gesamtschichtdicke des vorgenannten Komplettaufbaus von 0,2 bis 0,5, bevorzugt 0,25 bis 0,4 liegt. Der Basislack (B.3.1) hat also einen vergleichsweise hohen Anteil an der Gesamtschichtdicke der Mehrschichtlackierung.

### Die erfindungsgemäß einzusetzenden Basislacke

Der erfindungsgemäß einzusetzende Basislack (b.2.1) enthält mindestens eine wässrige Dispersion eines Polyurethans (PUR) als Bindemittel. Polyurethane, deren Aufbau, Ausgangsstoffe und deren Herstellung sind allgemein bekannt und bedürfen keiner detailreichen Erläuterung. Solche Polymere sind grundsätzlich durch an sich bekannte Polyaddition von beispielsweise Polyisocyanaten mit Polyolen und anteilig auch Polyaminen herstellbar.

Der Begriff Polyurethan umfasst im Einklang mit dem Verständnis des Fachmanns auf dem Gebiet der Polymerchemie selbstverständlich nicht nur reine Polyurethanpolymere, sondern auch Mischpolymerisate, die Polyurethane enthalten. Solche Polymere, beispielsweise Polyurethan-Poly(meth)acrylat-polymere, umfassen jedenfalls anteilig Polyurethansegmente und weisen demnach auch die chemischen und strukturellen Spezifika von Polyurethanen auf.

Bevorzugt besitzt das in der Dispersion vorhandene Polyurethan, bezogen auf den Festkörper, eine Säurezahl von 0 bis 75 mg KOH/g, insbesondere von 0 bis 50 mg KOH/g (Messmethode siehe unten).

Das in der Dispersion vorhandene Polyurethan kann Hydroxylgruppen besitzen oder auch kaum oder keine Hydroxylgruppen enthalten. Die OH-Zahl des Polymers liegt, bezogen auf den Festkörper, bevorzugt von 0 bis 150 mg KOH/g, insbesondere 0 bis 75 mg KOH/g (Messmethode siehe unten).

Der Anteil der aus den wässrigen Dispersionen stammenden Polyurethane, bezogen auf das Gesamtgewicht des pigmentierten wässrigen Basislacks (b.3.1) oder (b.3.2.x), beträgt beispielsweise 1 bis 30 Gew.-%, besonders bevorzugt 4 bis 25 Gew.-% und ganz besonders bevorzugt 6 bis 20 Gew.-% oder sogar 8 bis 15 Gew.-%.

In einer ersten bevorzugten Ausführungsform ist die wässrige Dispersion eines Polyurethans (PUR) eine spezielle wässrige Dispersion, nämlich eine Polyurethan-Polyharnstoff-Dispersion (PD). Dies bedeutet also, dass die in der Dispersion vorhandenen Polymer-Partikel Polyurethan-Polyharnstoff-basiert sind.

Die in der wässrigen Polyurethan-Polyharnstoff-Dispersion (PD) enthaltenen Polyurethan-Polyharnstoff-Partikel besitzen einen Gelanteil von mindestens 50 % (Messmethode siehe unten). Zudem besitzen die in der Dispersion (PD) enthaltenen Polyurethan-Polyharnstoff-Partikel eine mittlere Teilchengröße (auch mittlere Partikelgröße genannt) von 40 bis 2000 Nanometern (nm) (Messmethode siehe unten).

Bei den Dispersionen (PD) handelt es sich also um Mikrogel-Dispersionen. Denn wie bereits oben beschrieben, handelt es sich bei einer Mikrogel-Dispersion um PolymerDispersionen, in welchen zum einen das Polymer in Form von vergleichsweise kleinen Partikeln beziehungsweise Mikro-Partikeln vorliegt, zum anderen die Polymer-Partikel zumindest teilweise intramolekular vernetzt sind. Letzteres bedeutet, dass die innerhalb eines Partikels vorhandenen Polymerstrukturen einem typischen makroskopischen Netzwerk gleichen mit dreidimensionaler Netzwerkstruktur. Makroskopisch betrachtet handelt es sich bei einer solchen Mikrogel-Dispersion aber nach wie vor um eine Dispersion von Polymerpartikeln in einem Dispersionsmedium, beispielsweise Wasser. Zwar können die Partikel auch untereinander zum Teil Vernetzungsbrücken aufweisen (dies ist rein herstellungsbedingt kaum auszuschließen), jedoch ist das System jedenfalls eine Dispersion mit darin enthaltenen diskreten Partikeln, die eine messbare mittlere Teilchengröße aufweisen.

Da die Mikrogele Strukturen repräsentieren, welche zwischen verzweigten und makroskopisch vernetzten Systemen liegen, sie folglich die Charakteristika von in geeigneten organischen Lösungsmitteln löslichen Makromolekülen mit Netzwerkstruktur und unlöslichen makroskopischen Netzwerken kombinieren, kann der Anteil der vernetzten Polymeren beispielsweise erst nach Isolation des festen Polymeren nach Entfernung von Wasser und gegebenenfalls organischen Lösungsmitteln und nachfolgender Extraktion ermittelt werden. Dabei macht man sich zunutze, dass die ursprünglich in geeigneten organischen Lösungsmitteln löslichen Mikrogel-Partikel nach Isolation ihre innere Netzwerkstruktur behalten und sich im Feststoff wie ein makroskopisches Netzwerk verhalten. Die Vernetzung kann über den experimentell zugänglichen Gelanteil überprüft werden. Letztlich handelt es sich beim Gelanteil um den Anteil des Polymers aus der Dispersion, der sich als isolierter Feststoff nicht molekular dispers in einem Lösemittel lösen lässt. Dabei muss ausgeschlossen werden, dass bei der Isolierung des polymeren Feststoffs nachgeschaltete Vernetzungsreaktionen den Gelanteil weiter erhöhen. Dieser unlösliche Anteil entspricht wiederum dem Anteil des in der Dispersion in Form von intramolekular vernetzen Partikeln beziehungsweise Partikelanteilen vorliegenden Polymers.

Im Rahmen der vorliegenden Erfindung hat sich gezeigt, dass Mikrogel-Dispersionen mit Polymerpartikeln mit Teilchengrößen im genannten Bereich die geforderten anwendungstechnischen Eigenschaften besonders gut zu erfüllen wissen. Es kommt also insbesondere auf die Kombination von eher geringen Teilchengrößen und einem trotzdem vorhandenen signifikanten vernetzten Anteil beziehungsweise Gelanteil an. Auf diese Weise sind die vorteilhaften Eigenschaften, insbesondere die Kombination von guten optischen und mechanischen Eigenschaften von Mehrschichtlackierungen einerseits und ein hoher Festkörper von wässrigen Basislacken andererseits, zu erreichen.

Die in der wässrigen Polyurethan-Polyharnstoff-Dispersion (PD) enthaltenen Polyurethan-Polyharnstoff-Partikel besitzen vorzugsweise einen Gelanteil von mindestens 60 %, besonders bevorzugt von mindestens 70 %, insbesondere bevorzugt von mindestens 80 %. Der Gelanteil kann also bis zu 100 % beziehungsweise annähernd 100 %, beispielsweise 99 % oder 98 % betragen. In einem solchen Fall liegt also das gesamte beziehungsweise annähernd das gesamte Polyurethan-Polyharnstoff-Polymer in Form von vernetzten Partikeln vor.

Die in der Dispersion (PD) enthaltenen Polyurethan-Polyharnstoff-Partikel besitzen vorzugsweise eine mittlere Teilchengröße von 40 bis 1500 nm, nochmals bevorzugt von 100 bis 1000 nm, darunter bevorzugt 110 bis 500 nm und nochmals bevorzugt 120 bis 300 nm. Ein ganz besonders bevorzugter Bereich liegt von 130 bis 250 nm.

Die erhaltene Polyurethan-Polyharnstoff-Dispersion (PD) ist wässrig.

Der Ausdruck "wässrig" ist dem Fachmann in diesem Zusammenhang bekannt. Gemeint ist grundsätzlich ein System, das als Dispersionsmedium nicht ausschließlich oder hauptsächlich organische Lösemittel (auch Lösungsmittel genannt) enthält, sondern das im Gegenteil als Dispersionsmedium einen signifikanten Anteil Wasser enthält. Bevorzugte Ausführungsformen des wässrigen Charakters, die anhand des Maximalgehalts organischer Lösemittel und/oder anhand des Gehalts an Wasser definiert sind, werden weiter unten beschrieben.

Die in der Dispersion (PD) enthaltenen Polyurethan-Polyharnstoff-Partikel enthalten bevorzugt, jeweils in umgesetzter Form, (Z.1.1) mindestens ein Isocyanatgruppenhaltiges Polyurethan-Präpolymer enthaltend anionische und/oder in anionische Gruppen überführbare Gruppen sowie (Z.1.2) mindestens ein Polyamin enthaltend zwei primäre Aminogruppen und ein oder zwei sekundäre Aminogruppen.

Sofern im Rahmen der vorliegenden Erfindung angegeben ist, dass Polymere, beispielsweise die Polyurethan-Polyharnstoff-Partikel der Dispersion (PD), bestimmte Komponenten in umgesetzter Form enthalten, ist hierunter zu verstehen, dass bei der Herstellung der jeweiligen Polymere diese bestimmten Komponenten als Ausgangsverbindungen eingesetzt werden. Je nach Art der Ausgangsverbindungen erfolgt die jeweilige Umsetzung zum Zielpolymer nach unterschiedlichen Mechanismen. So werden augenscheinlich bei der Herstellung von Polyurethan-Polyharnstoff-Partikeln beziehungsweise Polyurethan-Polyharnstoff-Polymeren die Komponenten (Z.1.1) und (Z.1.2) durch Reaktion der Isocyanatgruppen von (Z.1.1) mit den Aminogruppen von (Z.1.2) unter Ausbildung von Harnstoffbindungen miteinander umgesetzt. Das Polymer enthält dann natürlich die vorher vorhandenen Aminogruppen und Isocyanatgruppen in Form von Harnstoffgruppen, das heißt in ihrer entsprechend umgesetzten Form. Trotzdem enthält das Polymer letztlich die beiden Komponenten (Z.1.1) und (Z.1.2), denn abgesehen von den umgesetzten Isocyanatgruppen und Aminogruppen verbleiben die Komponenten unverändert. Demnach wird der Übersicht halber angegeben, dass das jeweilige Polymer die Komponenten, jeweils in umgesetzter Form, enthält. Die Bedeutung des Ausdrucks "das Polymer enthält, in umgesetzter Form, eine Komponente (X)", ist also gleichzusetzen mit der Bedeutung des Ausdrucks "bei der Herstellung des Polymers wurde die Komponente (X) einsetzt".

Nochmals bevorzugt bestehen die Polyurethan-Polyharnstoff-Partikel aus den beiden Komponenten (Z.1.1) und (Z.1.2), das heißt sie werden aus diesen beiden Komponenten hergestellt.

Der Anteil des Polyurethan-Polyharnstoff-Polymers in der Dispersion (PD) beträgt bevorzugt 25 bis 55 Gew.-%, bevorzugt 30 bis 50 Gew.-%, nochmals bevorzugt 35 bis 45 Gew.-%, jeweils bezogen auf die Gesamtmenge der Dispersion (Bestimmung über den Festkörpergehalt).

Der Anteil von Wasser in der Dispersion (PD) beträgt bevorzugt 45 bis 75 Gew.-%, bevorzugt 50 bis 70 Gew.-%, nochmals bevorzugt 55 bis 65 Gew.-%, jeweils bezogen auf die Gesamtmenge der Dispersion.

Das in der Dispersion vorhandene Polyurethan-Polyharnstoff-Polymer besitzt, bezogen auf den Festkörper, bevorzugt eine Säurezahl von 10 bis 35 mg KOH/g, insbesondere von 15 bis 23 mg KOH/g (Messmethode siehe unten).

Das in der Dispersion vorhandene Polyurethan-Polyharnstoff-Polymer besitzt bevorzugt kaum oder keine Hydroxylgruppen. Die OH-Zahl des Polymers liegt, bezogen auf den Festkörper, bevorzugt kleiner als 15 mg KOH/g, insbesondere kleiner 10 mg KOH/g, nochmals bevorzugt kleiner 5 mg KOH/g (Messmethode siehe unten).

Entsprechende Polyurethan-Polyharnstoff-Dispersionen (PD) sowie entsprechende Herstellverfahren werden beispielsweise beschrieben in WO2016/091546 A1 oder auch WO2016/091539 A1.

Der Anteil der Dispersionen (PD), bezogen auf das Gesamtgewicht des pigmentierten wässrigen Basislacks, beträgt bevorzugt 2,5 bis 60 Gew.-%, besonders bevorzugt 10 bis 50 Gew.-% und ganz besonders bevorzugt 15 bis 40 Gew.-% oder sogar 10 bis 30 Gew.-%.

Der Anteil der aus den Dispersionen (PD) stammenden Polyurethan-Polyharnstoff-Polymere, bezogen auf das Gesamtgewicht des pigmentierten wässrigen Basislacks (b.3.1) oder (b.3.2.x), beträgt beispielsweise 1 bis 30 Gew.-%, besonders bevorzugt 4 bis 25 Gew.-% und ganz besonders bevorzugt 6 bis 20 Gew.-% oder sogar 8 bis 15 Gew.-%.

In einer zweiten bevorzugten Ausführungsform der vorliegenden Erfindung ist mindestens eine wässrige Dispersion eines Polyurethans (PUR) als Bindemittel eine wässrige Sekundärdispersion eines anionisch oder nicht-ionisch, bevorzugt nicht-ionisch stabilisierten Polyurethans.

Anionische und nicht-ionische Stabilisierung sind im Zusammenhang mit wässrigen Polymerdispersionen bekannte Begriffe und beschreiben die durch anionische und/oder in anionische Gruppen überführbare Gruppen wie Säuregruppen (anionische Stabilisierung) beziehungsweise durch nicht-ionische hydrophile Gruppen wie Polyethylengruppen (nicht-ionische Stabilisierung) unterstütze Dispergierung entsprechender Polymere in Wasser. Auch die Einführung entsprechender Gruppen im Rahmen der Synthese der Polymere und entsprechende Ausgangsverbindungen sind bekannt.

In einer dritten bevorzugten Ausführungsform der vorliegenden Erfindung ist mindestens eine wässrige Dispersion eines Polyurethans (PUR) als Bindemittel eine spezielle wässrige Dispersion (PM) eines Polyurethan-Poly(meth)acrylat-Polymers, das heißt ein Mischpolymerisat. Über die Bezeichnung "(Meth)Acrylat" sind Acrylate, Methacrylate sowie Mischungen hiervon erfasst. Die Begriffe Polymer und Polymerisat sind inhaltsgleich und damit austauschbar.

Die spezielle wässrige Dispersion (PM) eines Polyurethan-Poly(meth)acrylat-Polymers ist herstellbar durch
(i) Vorlage einer wässrigen Dispersion mindestens eines Polyurethans, und anschließend
(ii) Polymerisation einer Mischung von olefinisch ungesättigten Monomeren in Gegenwart des Polyurethans aus (i),
   wobei
   a. ein wasserlöslicher Initiator verwendet wird,
   b. die Zudosierung der olefinisch ungesättigten Monomere so erfolgt, dass in der Reaktionslösung eine Konzentration von 6,0 Gew.-%, bezogen auf die Gesamtmenge an zur Polymerisation eingesetzten olefinisch ungesättigten Monomeren, während der gesamten Reaktionsdauer nicht überschritten wird, und
   c. die Mischung der olefinisch ungesättigten Monomere mindestens ein mehrfach olefinisch ungesättigtes Monomer enthält.

Im ersten Herstellungsschritt wird also eine wässrige Dispersion eines Polyurethanharzes vorgelegt.

Im zweiten Herstellungsschritt wird eine Polymerisation einer Mischung von olefinisch ungesättigten Monomeren in Gegenwart des Polyurethans nach den Methoden der sogenannten radikalischen Emulsionspolymerisationen in Gegenwart mindestens eines Polymerisationsinitiators durchgeführt

Wichtig für die Herstellung der speziellen wässrigen Dispersionen enthaltend das Mischpolymerisat (MP) ist die Kontrolle der Bedingungen der Polymerisationsreaktion der Mischung von olefinisch ungesättigten Monomeren in Gegenwart des Polyurethans. Diese wird so durchgeführt, dass es sich um eine so genannte "verhungernde Polymerisation" (auch als "starve feed", "starve fed" oder "starved feed" Polymerisation bekannt) handelt. Als verhungernde Polymerisation im Sinne der vorliegenden Erfindung wird eine Emulsionspolymerisation angesehen bei der der Gehalt an Restmonomeren in der Reaktionslösung während der Reaktionsdauer minimiert wird, das heißt die Zudosierung der olefinisch ungesättigten Monomere so erfolgt, dass in der Reaktionslösung eine Konzentration von 6,0 Gew.-%, bevorzugt 5,0 Gew.-%, besonders bevorzugt 4,0 Gew.-%, besonders vorteilhaft 3,5 Gew.-%, jeweils bezogen auf die Gesamtmenge an zur Polymerisation eingesetzten olefinisch ungesättigten Monomeren, während der gesamten Reaktionsdauer nicht überschritten wird.

Durch den beschriebenen Herstellungsprozess haben die Mischpolymerisate in der wässrigen Dispersion insbesondere einen Kern-Schale-Aufbau, der durch den angegebenen Herstellungsprozess erreicht werden kann. Der Kern-Schale Aufbau ist dabei charakterisiert durch einen Kern, enthaltend mindestens ein Polyurethan, und eine Schale, enthaltend mindestens Polymer welches durch Polymerisation von olefinisch ungesättigten Monomeren erhalten wurde.

Der beschriebene Kern-Schale-Aufbau wird durch die speziellen Reaktionsbedingungen der verhungernden Polymerisation erreicht. Es sind während der gesamten Reaktionsdauer nie größere Mengen an olefinisch ungesättigten Monomeren in Gegenwart des vorgelegten Polyurethans vorhanden, welche in das Polyurethanteilchen eindringen könnten. Durch die während der Monomerzugabe in der wässrigen Phase immer vorhandenen Radikale, die der wasserlösliche Initiator bereitstellt, werden bei Zugabe sofort Oligomere gebildet, die nicht mehr in das Polyurethan eindringen können. Diese polymerisieren sodann auf der Oberfläche des Polyurethans.

In einer bevorzugten Ausführungsform beträgt das Gewichtsverhältnis von Kern zu Schale 80:20 bis 20:80, besonders bevorzugt 60:40 bis 40:60. Gemeint ist hierbei das Verhältnis der Mengen an zur Herstellung von Kern (Schritt (i), Polyurethan) und Schale (Schritt (ii), Mischung von olefinisch ungesättigten Monomeren) eingesetzten Komponenten.

Entsprechende wässrige Dispersionen (PM) und deren Herstellung werden in WO 2015/090814 A1, Seite 30, Zeile 15 bis Seite 45, Zeile 33 beschrieben. Diese Beschreibung inklusive entsprechender bevorzugter Ausführungen gilt technisch unverändert auch für die hier genannte bevorzugte dritte Ausführungsform.

Der mindestens eine wässrige Basislack ist pigmentiert, enthält also mindestens ein Pigment. Solche Farbpigmente und Effektpigmente sind dem Fachmann bekannt und werden beispielsweise in Römpp-Lexikon Lacke und Druckfarben, Georg Thieme Verlag, Stuttgart, New York, 1998, Seite 176 und 451, beschrieben. Die Begriffe farbgebendes Pigment und Farbpigment sind ebenso wie die Begriffe optisch effektgebendes Pigment und Effektpigment austauschbar.

Einsetzbare Effektpigmente sind beispielsweise plättchenförmige Metalleffektpigmente wie blättchenförmige Aluminiumpigmente, Goldbronzen, feuergefärbte Bronzen und/oder Eisenoxid-Aluminiumpigmente, Perglanzpigmente wie Fischsilber, basisches Bleicarbonat, Bismutoxidchlorid und/oder Metalloxid-Glimmer-Pigmente und/oder sonstige Effektpigmente wie plättchenförmiges Graphit, plättchenförmiges Eisenoxid, Mehrschicht-Effekt-Pigmente aus PVD-Filmen und/oder Liquid Crystal Polymer-Pigmente. Besonders bevorzugt werden jedenfalls, wenn auch nicht zwingend ausschließlich, plättchenförmige Metalleffektpigmente, insbesondere plättchenförmige Aluminiumpigmente, eingesetzt.

Als typische Farbpigmente zu nennen sind insbesondere anorganische farbgebende Pigmente wie Weißpigmente wie Titandioxid, Zink-Weiß, Zinksulfid oder Lithopone; Schwarzpigmente wie Ruß, Eisen-Mangan-Schwarz oder Spinellschwarz; Buntpigmente wie Chromoxid, Chromoxidhydratgrün, Kobaltgrün oder Ultramaringrün, Kobaltblau, Ultramarinblau oder Manganblau, Ultramarinviolett oder Kobalt- und Manganviolett, Eisenoxidrot, Cadmiumsulfoselenid, Molybdatrot oder Ultramarinrot; Eisenoxidbraun, Mischbraun, Spinell- und Korundphasen oder Chromorange; oder Eisenoxidgelb, Nickeltitangelb, Chromtitangelb, Cadmiumsulfid, Cadmiumzinksulfid, Chromgelb oder Bismutvanadat.

Besonders bevorzugt handelt es sich bei dem Basislacks (b.3.1) oder (b.3.2.x) um einen weißen Basislack. Demzufolge enthält der Basislack bevorzugt ein Weißpigment.

Der Anteil der Pigmente kann beispielsweise im Bereich von 2,5 bis 40 Gew.-%, bevorzugt 5,0 bis 35 Gew.-%, besonders bevorzugt 7,5 bis 30 Gew.-%, bezogen auf das Gesamtgewicht des pigmentierten wässrigen Basislacks, liegen.

Der mindestens eine Basislack kann noch mindestens ein von dem in der Dispersion enthaltenen Polyurethan (PUR) Polymer verschiedenes Polymer als Bindemittel enthalten, insbesondere mindestens ein Polymer ausgewählt aus der Gruppe bestehend aus Polyurethanen, Polyestern, Polyacrylaten und/oder Mischpolymerisaten der genannten Polymere, insbesondere Polyester und/oder Polyurethan-Polyacrylate. Bevorzugte Polyester werden beispielsweise in DE 4009858 A1 in Spalte 6, Zeile 53 bis Spalte 7, Zeile 61 und Spalte 10, Zeile 24 bis Spalte 13, Zeile 3 beschrieben. Bevorzugte Polyurethan-Polyacrylat-Mischpolymerisate (acrylierte Polyurethane) und deren Herstellung werden beispielsweise in WO 91/15528 A1, Seite 3, Zeile 21 bis Seite 20, Zeile 33 sowie in DE 4437535 A1, Seite 2, Zeile 27 bis Seite 6, Zeile 22 beschrieben. Die beschriebenen Polymere als Bindemittel sind bevorzugt hydroxyfunktionell und besitzen insbesondere bevorzugt eine OH-Zahl im Bereich von 20 bis 200 mg KOH/g, besonders bevorzugt von 50 bis 150 mg KOH/g. Besonders bevorzugt enthalten die erfindungsgemäßen Basislacke mindestens ein hydroxyfunktionelles Polyurethan-Polyacrylat-Mischpolymerisat, nochmals bevorzugt mindestens ein hydroxyfunktionelles Polyurethan-Polyacrylat-Mischpolymerisat sowie mindestens einen hydroxyfunktionellen Polyester.

Der Anteil der weiteren Polymere als Bindemittel kann breit variieren und liegt vorzugsweise im Bereich von 0,5 bis 20,0 Gew.-%, bevorzugt 1,0 bis 15,0 Gew.-%, besonders bevorzugt 1,5 bis 10,0 Gew.-%, jeweils bezogen auf das Gesamtgewicht des erfindungsgemäßen Basislacks.

Zudem enthält der mindestens eine Basislack bevorzugt mindestens ein an sich bekanntes typisches Vernetzungsmittel. Bevorzugt enthält es als Vernetzungsmittel mindestens ein Aminoplastharz und/oder ein blockiertes Polyisocyanat, bevorzugt ein Aminoplastharz. Unter den Aminoplastharzen sind insbesondere Melaminharze bevorzugt.

Der Anteil der Vernetzungsmittel, insbesondere Aminoplastharze und/oder blockierte Polyisocyanate, besonders bevorzugt Aminoplastharze, darunter bevorzugt Melaminharze, liegt vorzugsweise im Bereich von 0,5 bis 20,0 Gew.-%, bevorzugt 1,0 bis 15,0 Gew.-%, besonders bevorzugt 1,5 bis 10,0 Gew.-%, jeweils bezogen auf das Gesamtgewicht des erfindungsgemäßen Basislacks.

Darüber hinaus kann der mindestens eine Basislack noch mindestens einen weiteren Zusatzstoff enthalten. Beispiele für derartige Zusatzstoffe sind Verdicker wie Schichtsilikate (Laponite), von den bereits genannten Polymeren als Bindemittel verschiedene physikalisch, thermisch und/oder mit aktinischer Strahlung härtbare Polymere als Bindemittel, weitere Vernetzungsmittel, organische Lösemittel, Reaktivverdünner, transparente Pigmente, Füllstoffe, molekulardispers lösliche Farbstoffe, Nanopartikel, Lichtschutzmittel, Antioxidantien, Entlüftungsmittel, Emulgatoren, Füllstoffe, Slipadditive, Polymerisationsinhibitoren, Initiatoren für radikalische Polymerisationen, Haftvermittler, Verlaufsmittel, filmbildende Hilfsmittel, Sag-Control-Agents (SCAs), Flammschutzmittel, Korrosionsinhibitoren, Wachse, Sikkative, Biozide und Mattierungsmittel. Solche Zusatzstoffe werden in den üblichen und bekannten Mengen eingesetzt.

Der Festkörpergehalt (oder Festkörper) des erfindungsgemäßen Basislacks ist vergleichsweise hoch und beträgt mindestens 35 %, bevorzugt mindestens 40 % und besonders bevorzugt mindestens 45 % (auf das Gewicht bezogener Festkörper; Messmethode siehe unten). Bevorzugte Bereiche sind von 35 bis 62,5 %, bevorzugt 40 bis 60 %, nochmals bevorzugt 40 bis 57,5 %. Es ist von besonderem Vorteil, dass der erfindungsgemäße Basislack bei vergleichsweise hohen Festkörpern trotzdem eine Viskosität aufweist, die eine angemessene Applikation zulässt. Zudem lässt sich nur bei solch hohen Festkörpern die erfindungsgemäße Aufgabe lösen und vor allem die unten beschriebenen hervorragenden anwendungstechnischen Eigenschaften der Mehrschichtlackierung realisieren.

Bei den genannten Bedingungen, das heißt bei den genannten Festkörpergehalten, weisen bevorzugte erfindungsgemäße Basislacke bei 23°C und einer Scherbelastung von 1000 1/s eine Viskosität von 40 bis 160 mPa·s, insbesondere 70 bis 130 mPas auf (23°C, Rotationsviskosimeter, Scherrate= 1000/s). Im Rahmen der vorliegenden Erfindung wird eine Viskosität in diesem Bereich bei der angegebenen Scherbelastung als Spritzviskosität (Verarbeitungsviskosität) bezeichnet. Bekanntermaßen werden Beschichtungsmittel bei Spritzviskosität appliziert, das heißt sie besitzen unter den dann vorliegenden Bedingungen (hohe Scherbelastung) eine Viskosität, die insbesondere nicht zu hoch ist, um eine effektive Applikation zu ermöglichen. Dies bedeutet, dass die Einstellung der Spritzviskosität wichtig ist, um einen Lack überhaupt durch Spritzverfahren applizieren zu können und um zu gewährleisten, dass sich auf dem zu beschichtenden Substrat ein vollständiger, gleichmäßiger Beschichtungsfilm ausbilden kann. Es ist von besonderem Vorteil, dass auch ein auf Spritzviskosität eingestellter erfindungsgemäßer Basislack einen hohen Festkörper besitzt. Die bevorzugten Bereiche des Festköpergehalts, insbesondere die Untergrenzen, lassen also erkennen, dass der erfindungsgemäße Basislack im applikationsfähigen Zustand bevorzugt vergleichsweise hohe Festkörpergehalte aufweist.

Der erfindungsgemäße Basislack ist wässrig. Der Ausdruck "wässrig" ist dem Fachmann in diesem Zusammenhang bekannt. Gemeint ist grundsätzlich ein System, das als Dispersionsmedium nicht ausschließlich oder hauptsächlich organische Lösemittel (auch Lösungsmittel genannt) enthält, sondern das im Gegenteil als Dispersionsmedium einen signifikanten Anteil Wasser enthält. Bevorzugte Ausführungsformen des wässrigen Charakters sind anlassbezogen und individuell beschrieben.

Der Anteil von Wasser am mindestens einen Basislack beträgt bevorzugt von 25 bis 60 Gew.-%, nochmals bevorzugt 30 bis 55 % Gew.-% und insbesondere von 35 bis 50 Gew.-%.

Aus den genannten Bereichen für den Festkörper und den Anteil an Wasser folgt bereits, dass der mindestens eine Basislack bevorzugt eine nur geringe Menge an organischen Lösemitteln enthält.

Bevorzugt in diesem Sinne ist, dass die prozentuale Summe aus dem Festkörper des Basislacks und dem Anteil von Wasser am Basislack bei mindestens 75 Gew.-%, bevorzugt bei mindestens 80 Gew.-%, insbesondere bevorzugt bei mindestens 85 Gew.-%, liegt. Darunter bevorzugt sind Bereiche von 75 bis 95 Gew.-%, insbesondere 80 bis 90 Gew.-%. In dieser Angabe wird der Festkörper, der traditionell nur die Einheit "%" besitzt, in "Gew.-%" angegeben. Da der Festkörper im Rahmen der vorliegenden Erfindung letztlich auch eine prozentuale Gewichtsangabe darstellt, ist diese Form der Darstellung gerechtfertigt. Hat also beispielsweise ein Basislack einen Festkörper von 45 % und einen Wassergehalt von 40 Gew.-%, so beträgt die oben definierte prozentuale Summe aus dem Festkörper des Basislacks und dem Anteil von Wasser am Basislack 85 Gew.-%.

Der VOC Gehalt des mindestens einen Basislacks ist bevorzugt kleiner 15 %, nochmals bevorzugt kleiner 12 %.

Es ist wesentlich, dass der mindestens eine Basislack ein Pigment zu Bindemittel (P/B) Verhältnis von mehr als 0,75 aufweist. Bevorzugt beträgt das (P/B) Verhältnis mindestens 1,0 nochmals bevorzugt mindestens 1,25. Demzufolge ist der Anteil des Pigments im Verhältnis zum Bindemittelanteil vergleichsweise hoch. Der Anteil des Bindemittels, der wesentlich bei der Bestimmung des (P/B) Verhältnissen ist, ist im Einklang mit der DIN EN ISO 4618 gleichzusetzen mit dem nichtflüchtigen Anteil (Festkörper) des Beschichtungsmittels ohne Pigmente und Füllstoffe. Der für die Bestimmung des (P/B) Verhältnisses relevante Pigmentanteil umfasst neben den im engeren Sinne erfassten Pigmenten (Farbpigmente und Effektpigmente) auch Füllstoffe. Das (P/B) Verhältnis ist als Gewichtsverhältnis zu verstehen.

Das erfindungsgemäße Verfahren erlaubt die Herstellung von Mehrschichtlackierungen ohne Applikation und separater Härtung eines Füllers, wobei jedoch das der Herstellung zugrundeliegende Verfahren auf einer Standard-Anlage durchgeführt werden kann. Trotzdem resultieren durch die Anwendung des erfindungsgemäßen Verfahrens Mehrschichtlackierungen, die ausgezeichnete anwendungstechnische Eigenschaften aufweisen. Zu diesen anwendungstechnischen Eigenschaften gehören beispielsweise eine sehr geringe UV Transmission, eine gute Appearance, eine hohe Robustheit gegen Nadelstiche sowie gute mechanische Eigenschaften wie eine gute Steinschlagbeständigkeit.

Vorzugsweise weist die erfindungsgemäße Mehrschichtlackierung eine Transmission (T25) von weniger als 1 % auf (gemessen im Wellenlängenbereich von 400 bis 450 nm und bei einer Basislackschichtdicke von 25 Mikrometern). Bevorzugt weist die Mehrschichtlackierung eine Transmission (T24) von weniger als 1 % auf (gemessen im Wellenlängenbereich von 400 bis 450 nm und bei einer Basislackschichtdicke von 24 Mikrometern). Nochmals bevorzugte Transmissionseigenschaften sind wie folgt: (T23) (23 Mikrometer) weniger als 1 %, (T22) (22 Mikrometer) weniger als 1 %, (T22) (22 Mikrometer) weniger als 1 %, (T21) (21 Mikrometer) weniger als 1 %.

Die Messung kann anhand kommerziell verfügbarer Messgeräte zur Transmissionsbestimmung durchgeführt werden. Bekanntermaßen sinkt die Transmission bei ansonsten gleichbleienden Bedingungen bei Erhöhung der Schichtdicke. Eine Mehrschichtlackierung, die bei einer Basislackschichtdicke von 25 Mikrometern eine Transmission von weniger als 1 % aufweist, wird demzufolge auch bei einer Basislackschichtdicke von mehr als 25 Mikrometer eine Transmission von weniger als 1 % aufweisen.

Im Folgenden werden die bereits oben genannten Messmethoden erläutert und zudem die vorliegende Erfindung plakativ beschrieben.

### Festkörper

Soweit nicht anders angegeben, wurde der Festkörper nach DIN EN ISO 3251 bei 130°C; 60 min, Einwaage 1,0 g, bestimmt.

### Hydroxylzahl

Die Hydroxylzahl wurde in Anlehnung an R.-P. Krüger, R. Gnauck und R. Algeier, Plaste und Kautschuk, 20, 274 (1982), mittels Essigsäureanhydrid in Gegenwart von 4-Dimethylaminopyridin als Katalysator in einer Tetrahydrofuran (THF) / Dimethylformamid (DMF)-Lösung bei Raumtemperatur ermittelt, wobei der verbliebene Überschuss an Essigsäureanhydrid nach Acetylierung vollständig hydrolysiert wurde und die Essigsäure mit alkoholischer Kaliumhydroxid-Lösung potentiometrisch zurücktitriert wurde. Acetylierungszeiten von 60 min reichten in allen Fällen aus, um einen vollständigen Umsatz zu garantieren.

### Säurezahl

Die Säurezahl wurde in Anlehnung an die DIN EN ISO 2114 in homogener Lösung aus Tetrahydrofuran (THF) / Wasser (9 Vol.-Teile THF und 1 Vol.-Teil destilliertes Wasser) mit ethanolischer Kaliumhydroxid-Lösung bestimmt.

### Mittlere Partikelgröße

Die mittlere Partikelgröße (Volumenmittel) der in den Dispersionen (PD) enthaltenen Polyurethan-Polyharnstoff-Partikel werden im Rahmen der vorliegenden Erfindung durch Photonenkorrelationsspektroskopie (PCS) bestimmt.

Konkret zur Messung eingesetzt wurde ein "Malvern Nano S90" (Fa. Malvern Instruments) bei 25 ± 1 °C. Das Gerät deckt einen Größenbereich von 3 bis 3000 nm ab und war ausgestattet mit einem 4mW He-Ne Laser bei 633 nm. Die Dispersionen (PD) wurden soweit mit partikelfreiem, deionisierten Wasser als Dispergiermedium verdünnt, um sie anschließend in einer 1 ml Polystyrol-Küvette bei geeigneter Streuintensität zu vermessen. Die Auswertung erfolgte mittels digitalem Korrelator unter Zuhilfenahme der Auswertungssoftware Zetasizer Vers. 6.32 (Fa. Malvern Instruments). Es wurde fünf Mal gemessen und die Messungen an einer zweiten, frisch präparierten Probe wiederholt. Die Standardabweichung einer 5-fach Bestimmung betrug ≤ 4 %. Die maximale Abweichung des arithmetischen Mittels des Volumenmittels (V-average mean) von fünf Einzelmessungen ± 15 %. Die angegebene mittlere Partikelgröße (Volumenmittel) ist das arithmetische Mittel aus der mittleren Partikelgröße (Volumenmittel) der Einzelpräparationen. Die Überprüfung erfolgte mit Polystyrol-Standards mit zertifizierten Partikelgrößen zwischen 50 bis 3000 nm.

### Gelanteil

Der Gelanteil der in den Dispersionen (PD) enthaltenen Polyurethan-Polyharnstoff-Partikel (Mikrogel-Partikel) wird im Rahmen der vorliegenden Erfindung gravimetrisch bestimmt. Dabei wurde zunächst aus einer Probe einer wässrigen Dispersion (PD) (Einwaage 1,0 g) das enthaltene Polymer über Gefriertrocknung isoliert. Nach Bestimmung der Erstarrungstemperatur, der Temperatur, ab der sich der elektrische Widerstand der Probe bei weiterer Absenkung der Temperatur nicht mehr verändert, erfolgte die Haupttrocknung der vollständig eingefrorenen Probe üblicherweise im Druckbereich des Trocknungsvakuums zwischen 5 mbar und 0,05 mbar, bei einer um 10°C niedrigeren Trocknungstemperatur als der Erstarrungstemperatur. Durch schrittweise Erhöhung der Temperatur der beheizten Stellflächen auf 25°C wurde eine rasche Gefriertrocknung der Polymeren erreicht, wobei nach einer Trocknungsdauer von üblicherweise 12 Stunden die Menge an isoliertem Polymer (Festanteil, ermittelt über die Gefriertrocknung) konstant war und sich auch bei noch längerer Gefriertrocknung nicht mehr änderte. Durch Nachtrocknung bei einer Stellflächentemperatur von 30°C und maximal reduziertem Umgebungsdruck (üblicherweise zwischen 0,05 und 0,03 mbar) wurde eine optimale Trocknung des Polymeren erzielt.

Anschließend wurde das isolierte Polymer für eine Minute bei 130°C im Umluftofen gesintert und danach für 24 Stunden bei 25°C in einem Überschuss Tetrahydrofuran (Verhältnis Tetrahydrofuran zu Festanteil = 300 : 1) extrahiert. Dann wurde der unlösliche Anteil des isolierten Polymers (Gelanteil) über eine geeignete Fritte abgetrennt, 4 Stunden bei 50°C im Umluftofen getrocknet, und anschließend zurückgewogen.

Es wurde ferner sichergestellt, dass bei der Sintertemperatur von 130°C und Variation der Sinterzeiten zwischen einer Minute und zwanzig Minuten der ermittelte Gelanteil der Mikrogel-Partikel unabhängig von der Sinterzeit ist. Es ist also ausgeschlossen, dass bei der Isolierung des polymeren Feststoffs nachgeschaltete Vernetzungsreaktionen den Gelanteil weiter erhöhen.

Der auf diese Weise erfindungsgemäß bestimmte Gelanteil wird auch Gelanteil (gefriergetrocknet) genannt.

Parallel wurde ein Gelanteil, im Folgenden auch als Gelanteil (130°C) bezeichnet, gravimetrisch bestimmt, indem aus wässriger Dispersion (Einwaage 1,0 g) eine Polymerprobe bei 130°C, 60 min (Festkörper) isoliert wurde. Die Masse des Polymeren wurde bestimmt, um das Polymer anschließend analog zur oben beschriebenen Prozedur 24 Stunden bei 25°C in einem Überschuss an Tetrahydrofuran zu extrahieren, den unlöslichen Anteil (Gelanteil) abzutrennen, zu trocknen und zurück zu wiegen.

Es wurde eine Mehrschichtlackierung hergestellt, die auf einem zinkphosphatierten Stahlblech eine Elektrotauchlackschicht (E.1) in einer Schichtdicke von 12 Mikrometern, eine weißen Basislackschicht (B.3.1) in einer Schichtdicke von 30 Mikrometern und eine Klarlackschicht in einer Schichtdicke von 45 Mikrometern aufwies. Der der Basislackschicht (B.3.1) zugrundeliegende Basislack (b.3.1) wies einen Festkörper von 47 % auf und hatte ein (P/B)-Verhältnis von 1,6. Er enthielt zudem eine wässrige Dispersion eines Polyurethans (PUR) als Bindemittel, nämlich eine wässrige Dispersion (PM) eines Polyurethan-Poly(meth)acrylat-Polymers.

Die Mehrschichtlackierung wies eine Transmission (T21) von weniger als 1 % auf (das heißt bei einer Basislackschichtdicke von 21 Mikrometern betrug die Transmission weniger als 1 %). Zudem wies die Mehrschichtlackierung unter Anderem eine hervorragende Appearance (LW/SW), eine sehr gute Nadelstichrobustheit und hervorragende mechanische Eigenschaften (Steinschlagprüfung, Gitterschnittprüfung, Dampfstrahltest) auf.

## Patentansprüche

1. Verfahren zur Herstellung einer Mehrschichtlackierung (M) auf einer metallischen Karosserie (K) umfassend Karosserienähte (Kn) umfassend
(1) Herstellung einer gehärteten Elektrotauchlackschicht (E.1) auf dem metallischen Substrat (S) durch elektrophoretisches Aufbringen eines Elektrotauchlacks (e.1) auf das Substrat (S) und anschließende Härtung des Elektrotauchlacks (e.1),
(2) Herstellung einer gelierten PVC-Abdichtung (P.2) in einem Bereich der Karosserienähte (Kn) durch Aufbringen einer PVC-Abdichtungspaste (p.2) auf die gehärtete Elektrotauchlackschicht (E.1) in dem Bereich der Karosserienähte (Kn) und anschließende thermisch initiierte Gelierung der Paste (p.2),
(3) Herstellung einer Basislackschicht (B.3.1) oder (3.2) mehrerer direkt aufeinander folgender Basislackschichten (B.3.2.x) direkt auf der gemäß Schritt (2) erhaltenen Oberfläche durch (3.1) Aufbringen eines wässrigen Basislacks (b.3.1) direkt auf die Oberfläche oder (3.2) direkt aufeinanderfolgendes Aufbringen von mehreren Basislacken (b.3.2.x) auf die Oberfläche,
(4) Herstellung einer Klarlackschicht (K) direkt auf (4.1) der Basislackschicht (B.3.1) oder (4.2) der obersten Basislackschicht (B.3.2.x) durch Aufbringen eines Klarlacks (k) direkt auf (4.1) die Basislackschicht (B.3.1) oder (4.2) die oberste Basislackschicht (B.4.2.x),
(5) gemeinsame Härtung der (5.1) Basislackschicht (B.3.1) und der Klarlackschicht (K) oder (5.2) der Basislackschichten (B.3.2.x) und der Klarlackschicht (K),
**dadurch gekennzeichnet, dass**
der Basislack (b.3.1) oder die Basislacke (b.3.2.x) wässrig sind und mindestens ein Pigment enthalten und der Basislack (b.3.1) oder mindestens einer der Basislacke (b.3.2.x)
- mindestens eine wässrige Dispersion eines Polyurethans (PUR) als Bindemittel enthält, und
- ein Pigment zu Bindemittel (P/B) Verhältnis von mehr als 0,75 sowie
- einen Festkörper von mindestens 35 % aufweist.

2. Verfahren nach Anspruch 1, **dadurch gekennzeichnet, dass** der Festkörper der Basislack (b.3.1) oder mindestens einer der Basislacke (b.3.2.x) einen Festkörper von 35 bis 62,5 % aufweist.

3. Verfahren nach Anspruch 1 oder 2, **dadurch gekennzeichnet, dass** die in Stufe (2) eingesetzte PVC-Abdichtungspaste (p.2) eine Gelierungstemperatur von mindestens 145°C aufweist und die thermisch initiierte Gelierung bei einer Temperatur von mindestens 145°C durchgeführt wird.

4. Verfahren nach Anspruch 1 bis 3, **dadurch gekennzeichnet, dass** das Verfahren in einer auf ein Standardverfahren (5A-Verfahren) ausgerichteten Anlage stattfindet und die Gelierung der PVC-Paste dem in dieser Anlage vorhandenen Bereich zur Füllerhärtung durchgeführt wird.

5. Verfahren nach Anspruch 1 bis 4, **dadurch gekennzeichnet, dass** in Schritt (3) eine Herstellung einer Basislackschicht (B.3.1) direkt auf der gemäß Schritt (2) erhaltenen Oberfläche durch (3.1) Aufbringen eines wässrigen Basislacks (b.3.1) direkt auf die Oberfläche erfolgt.

6. Verfahren nach Anspruch 5, **dadurch gekennzeichnet, dass** die Gesamtschichtdicke (Trockenschichtdicke) aus Elektrotauchlackschicht (E.1), Basislackschicht (B.3.1) und Klarlackschicht (K) von 70 bis 110 Mikrometer beträgt.

7. Verfahren nach Anspruch 6, **dadurch gekennzeichnet, dass** das Verhältnis der Schichtdicke der Basislackschicht (B.3.1) zur Gesamtschichtdicke des vorgenannten Komplettaufbaus von 0,25 bis 0,5 liegt.

8. Verfahren nach Anspruch 5 bis 7, **dadurch gekennzeichnet, dass** der Basislack (b.3.1) ein weißer Basislack ist und ein Weißpigment enthält.

9. Verfahren nach Anspruch 1 bis 8, **dadurch gekennzeichnet, dass** mindestens eine wässrige Dispersion eines Polyurethans (PUR) als Bindemittel eine wässrige Polyurethan-Polyharnstoff-Dispersion (PD) enthaltend Polyurethan-Polyharnstoff-Partikel ist, wobei die in dieser Dispersion (PD) enthaltenen Polyurethan-Polyharnstoff-Partikel anionische und/oder in anionische Gruppen überführbare Gruppen enthalten und eine mittlere Teilchengröße von 40 bis 2000 nm sowie einem Gelanteil von mindestens 50 % aufweisen.

10. Verfahren nach Anspruch 1 bis 8, **dadurch gekennzeichnet, dass** mindestens eine wässrige Dispersion eines Polyurethans (PUR) als Bindemittel eine wässrige Sekundärdispersion eines anionisch oder nicht-ionisch, bevorzugt nicht-ionisch stabilisierten Polyurethans ist.

11. Verfahren nach Anspruch 3, **dadurch gekennzeichnet, dass** die in Stufe (2) eingesetzte PVC-Abdichtungspaste (p.2) eine Gelierungstemperatur von mindestens 155°C aufweist und die thermisch initiierte Gelierung bei einer Temperatur von mindestens 155°C durchgeführt wird.

12. Verfahren nach einem der Ansprüche 1 bis 11, **dadurch gekennzeichnet, dass** alle Härtungsschritte von Beschichtungsmitteln, die nach Schritt (2) des Verfahrens durchgeführt werden, bei Temperaturen von weniger als 150°C, bevorzugt weniger als 145°C durchgeführt werden.

13. Mehrschichtlackierung (M), die nach einem Verfahren gemäß Anspruch 1 bis 12 hergestellt wurde.

14. Mehrschichtlackierung nach Anspruch 13, **dadurch gekennzeichnet, dass** sie eine Transmission im Wellenlängenbereich von 400 bis 450 nm und bei einer Basislackschichtdicke von 25 Mikrometern von weniger als 1 % aufweist.

15. Karosserie (K) umfassend Karosserienähte (Kn), auf der eine Mehrschichtlackierung nach Anspruch 13 oder 14 angeordnet ist.

## Claims

1. A process for producing a multilayer coating (M) on a metallic vehicle body (K) comprising body seams (Kn) comprising
(1) producing a cured electrocoat layer (E.1) on the metallic substrate (S) by electrophoretic application of an electrocoat (e.1) to the substrate (S) and subsequent curing of the electrocoat (e.1),
(2) producing a gelled PVC seal (P.2) in a region of the body seams (Kn) by application of a PVC sealing paste (p.2) to the cured electrocoat layer (E.1) in the region of the body seams (Kn) and subsequent thermally initiated gelling of the paste (p.2),
(3) producing a basecoat layer (B.3.1) or (3.2) of two or more directly successive basecoat layers (B.3.2.x) directly on the surface obtained by step (2) by (3.1) application of an aqueous basecoat (b.3.1) directly to the surface or (3.2) directly successive application of two or more basecoats (b.3.2.x) to the surface,
(4) producing a clearcoat layer (K) directly on (4.1) the basecoat layer (B.3.1) or (4.2) the uppermost basecoat layer (B.3.2.x) by application of a clearcoat (k) directly to (4.1) the basecoat layer (B.3.1) or (4.2) the uppermost basecoat layer (B.4.2.x),
(5) jointly curing the (5.1) basecoat layer (B.3.1) and the clearcoat layer (K) or (5.2) the basecoat layers (B.3.2.x) and the clearcoat layer (K),
wherein
the basecoat (b.3.1) or the basecoats (b.3.2.x) are aqueous and contain at least one pigment and the basecoat (b.3.1) or at least one of the basecoats (b.3.2.x)
- contains at least one aqueous dispersion of a polyurethane (PUR) as binder and has
- a pigment to binder (P/B) ratio of more than 0.75 and
- a solids content of at least 35%.

2. The process according to claim 1, wherein the solids content of the basecoat (b.3.1) or at least one of the basecoats (b.3.2.x) is a solids content of 35% to 62.5%.

3. The process according to claim 1 or 2, wherein the PVC sealing paste (p.2) used in step (2) has a gelation temperature of at least 145°C and the thermally initiated gelation is performed at a temperature of at least 145°C.

4. The process according to claims 1 to 3, wherein the process is performed in a plant configured for a standard process (5A process) and the gelation of the PVC paste is performed in the region for filler curing present in this plant.

5. The process according to claims 1 to 4, wherein step (3) comprises producing a basecoat layer (B.3.1) directly on the surface obtained by step (2) by (3.1) application of an aqueous basecoat (b.3.1) directly onto the surface.

6. The process according to claim 5, wherein the total layer thickness (dry layer thickness) of electrocoat layer (E.1), basecoat layer (B.3.1) and clearcoat layer (K) is from 70 to 110 micrometers.

7. The process according to claim 6, wherein the ratio of the layer thickness of the basecoat layer (B.3.1) to the total layer thickness of the aforementioned complete structure is from 0.25 to 0.5.

8. The process according to claims 5 to 7, wherein the basecoat (b.3.1) is a white basecoat and contains a white pigment.

9. The process according to claims 1 to 8, wherein at least one aqueous dispersion of a polyurethane (PUR) as binder is an aqueous polyurethane-polyurea dispersion (PD) comprising polyurethane-polyurea particles, wherein the polyurethane-polyurea particles present in this dispersion (PD) comprise anionic groups and/or groups which can be converted into anionic groups and have an average particle size of 40 to 2000 nm and a gel fraction of at least 50%.

10. The process according to claims 1 to 8, wherein at least one aqueous dispersion of a polyurethane (PUR) as binder is an aqueous secondary dispersion of an anionically or nonionically, preferably nonionically, stabilized polyurethane.

11. The process according to claim 3, wherein the PVC sealing paste (p.2) employed in step (2) has a gelation temperature of at least 155°C and the thermally initiated gelation is performed at a temperature of at least 155°C.

12. The process according to any of claims 1 to 11, wherein all curing steps of coating compositions which are performed after step (2) of the process are performed at temperatures of less than 150°C, preferably less than 145°C.

13. A multilayer coating (M) produced by a process according to claims 1 to 12.

14. The multilayer coating according to claim 13, wherein it has a transmittance in the wavelength range of 400 to 450 nm and at a basecoat layer thickness of 25 micrometers of less than 1%.

15. A vehicle body (K) comprising body seams (Kn) on which a multilayer coating according to claim 13 or 14 is arranged.

## Revendications

1. Procédé de fabrication d'un laquage multicouche (M) sur une carrosserie (K) métallique comprenant des joints de carrosserie (Kn) comprenant
(1) la réalisation d'une couche de laque d'électro-immersion (E.1) durcie sur le substrat métallique (S) par application électrophorétique d'une laque d'électro-immersion (e.1) sur le substrat (S) et durcissement consécutif de la laque d'électro-immersion (e.1),
(2) la réalisation d'une étanchéité gélifiée à base de PVC (P.2) dans une zone des joints de carrosserie (Kn) par application d'une pâte d'étanchéité à base de PVC (p.2) sur la couche de laque d'électro-immersion (E.1) durcie dans la zone des joints de carrosserie (Kn) et gélification initiée thermiquement consécutive de la pâte (p.2),
(3) la réalisation d'une couche de laque de base (B.3.1) ou (3.2) de plusieurs couches de laque de base (B.3.2.x) directement consécutives directement sur la surface obtenue selon l'étape (2) par (3.1) application d'une laque de base aqueuse (b.3.1) directement sur la surface ou par (3.2) application directement consécutive de plusieurs couches de laque de base (b.3.2.x) sur la surface,
(4) la réalisation d'une couche de laque claire (K) directement sur (4.1) la couche de laque de base (B.3.1) ou sur (4.2) la couche de laque de base supérieure (B.3.2.x) par application d'une laque claire (k) directement sur (4.1) la couche de laque de base (B.3.1) ou sur (4.2) la couche de laque de base supérieure (B.4.2.x),
(5) le durcissement commun (5.1) de la couche de laque de base (B.3.1) et de la couche de laque claire (K) ou (5.2) des couches de laque de base (B.3.2.x) et de la couche de laque claire (K),
**caractérisé en ce que**
la laque de base (b.3.1) ou les laques de base (b.3.2.x) sont aqueuses et contiennent au moins un pigment et la laque de base (b.3.1) ou au moins l'une des laques de base (b.3.2.x)
- contient au moins une dispersion aqueuse d'un polyuréthane (PUR) en tant que liant et
- présente un rapport pigment à liant (P/B) supérieur à 0,75 ainsi que
- une teneur en solides d'au moins 35%

2. Procédé selon la revendication 1, **caractérisé en ce que** les corps solides de la laque de base (b.3.1) ou d'au moins l'une des laques de base (b.3.2.x) présentent une teneur en solides de 35 à 62,5%.

3. Procédé selon la revendication 1 ou 2, **caractérisé en ce que** la pâte d'étanchéité à base de PVC (p.2) utilisée dans l'étape (2) présente une température de gélification d'au moins 145°C et la gélification initiée thermiquement est réalisée à une température d'au moins 145°C.

4. Procédé selon la revendication 1 à 3, **caractérisé en ce que** le procédé a lieu dans une installation axée sur un procédé standard (procédé 5A) et la gélification de la pâte à base de PVC est réalisée dans la zone présente dans cette installation, destinée au durcissement de la charge.

5. Procédé selon la revendication 1 à 4, **caractérisé en ce que**, dans l'étape (3), on effectue une réalisation d'une couche de laque de base (B.3.1) directement sur la surface obtenue selon l'étape (2) par (3.1) application d'une laque de base aqueuse (b.3.1) directement sur la surface.

6. Procédé selon la revendication 5, **caractérisé en ce que** l'épaisseur totale (épaisseur de couche à sec) de la couche de laque d'électro-immersion (E.1), de la couche de laque de base (B.3.1) et de la couche de laque claire (K) est de 70 à 110 micromètres.

7. Procédé selon la revendication 6, **caractérisé en ce que** le rapport de l'épaisseur de couche de la couche de laque de base (B.3.1) à l'épaisseur totale des couches de la construction complète susmentionnée est de 0,25 à 0,5.

8. Procédé selon la revendication 5 à 7, **caractérisé en ce que** la laque de base (b.3.1) est une laque de base blanche et contient un pigment blanc.

9. Procédé selon la revendication 1 à 8, **caractérisé en ce qu'**au moins une dispersion aqueuse d'un polyuréthane (PUR) en tant que liant est une dispersion aqueuse de polyuréthane-polyurée (PD) contenant des particules de polyuréthane-polyurée, les particules de polyuréthane-polyurée contenues dans cette dispersion (PD) contenant des groupes anioniques et/ou des groupes transformables en groupes anioniques et présentant une grosseur moyenne de particule de 40 à 2000 nm ainsi qu'une proportion de gel d'au moins 50%.

10. Procédé selon la revendication 1 à 8, **caractérisé en ce qu'**au moins une dispersion aqueuse d'un polyuréthane (PUR) en tant que liant est une dispersion aqueuse secondaire d'un polyuréthane stabilisé anioniquement ou non ioniquement, de préférence non ioniquement.

11. Procédé selon la revendication 3, **caractérisé en ce que** la pâte d'étanchéité à base de PVC (p.2) utilisée dans l'étape (2) présente une température de gélification d'au moins 155°C et la gélification initiée thermiquement est réalisée à une température d'au moins 155°C.

12. Procédé selon l'une des revendications 1 à 11, **caractérisé en ce que** toutes les étapes de durcissement d'agents de revêtement, qui sont réalisées selon l'étape (2) du procédé, sont réalisées à des températures inférieures à 150°C, de préférence inférieures à 145°C.

13. Laquage multicouche (M), qui a été fabriqué selon un procédé selon la revendication 1 à 12.

14. Laquage multicouche selon la revendication 13, **caractérisé en ce qu'**il présente une transmission, dans la plage de longueurs d'onde de 400 à 450 nm et à une épaisseur de la couche de laque de base de 25 micromètres, inférieure à 1%.

15. Carrosserie (K) comprenant des joints de carrosserie (Kn), sur laquelle est disposé un laquage multicouche selon la revendication 13 ou 14.
